# EUROPEAN PATENT APPLICATION

(11) **EP 4 550 883 A1**
(43) Date of publication of application: **07.05.2025**
(21) Application number: 24206994.6
(22) Date of filing: 16.10.2024
(51) Int. Cl.: H04W 36/00, H04W 12/06, H04W 12/08, H04W 36/08, H04W 36/36, H04W 48/20, H04W 84/12

(54) **ELECTRONIC APPARATUS, METHOD FOR CONTROLLING ELECTRONIC APPARATUS, PROGRAM, AND STORAGE MEDIUM**

(30) Priority: 06.11.2023 JP 2023189034
(71) Applicant: CANON KABUSHIKI KAISHA, Tokyo 146-8501 (JP)
(72) Inventor: SUGAWARA, Wahei, Tokyo, 146-8501 (JP)
(74) Representative: Canon Europe Limited

(57) **Abstract**

An electronic apparatus including at least one memory and at least one processor which function as: a changing unit configured to change an access point serving as a connection destination based on a change request of an access point serving as a connection destination received from a connected access point, and a control unit configured to perform control so that the changing unit is prevented from changing the access point serving as the connection destination to a second access point as a connection destination after the change, the second access point being a candidate for a change destination based on the change request and configured to be connected using a second authentication method different in type from a first authentication method used to connect to a first access point connected before the change of the connection destination.

## Description

### BACKGROUND OF THE INVENTION

### Field of the Invention

The present disclosure relates to an electronic apparatus capable of changing a connection destination access point (AP) to connect to in accordance with a connection destination change request from the AP, a method for controlling the electronic apparatus, a program, and a storage medium.

### Description of the Related Art

A technique for an extended service set (ESS) including a plurality of APs involves dynamically switching a connection destination AP to which a station (STA) is to connect in the ESS to efficiently exchange data between the AP and the STA. When it is determined that the AP as the connection destination is to be switched on the basis of, for example, the congestion of the AP to which the STA is currently connected, the occupancy of the other APs, or radio wave conditions, the currently connected AP transmits an AP change request to the STA. Upon receiving the AP change request, the STA switches the connection destination AP in accordance with the request to connect to an appropriate AP.

Japanese Patent Laid-Open No. 2021-175068 discloses the following process for transmitting a request from a router having an AP function to a currently connected wireless slave unit to change a connection destination. A mobile router (MR1) connectable to a plurality of wireless slave units checks whether a wireless slave terminal supports Institute of Electrical and Electronics Engineers (IEEE) 802.11v. Whether the wireless slave terminal supports IEEE 802.11v can be determined from an Association Request frame transmitted from the wireless slave terminal to wirelessly connect to the MR1. If the wireless slave terminal supports IEEE 802. 11v, a basic service set (BSS) transition management (BTM) Request frame is transmitted to the wireless slave terminal. In the BTM Request frame, a BSS Transition Candidate List Entries field specifies a basic service set identifier (BSSID) of a master router RT2 as the connection destination. Accordingly, switching of the connection destination of the slave terminal is prompted. In accordance with the received BTM Request frame, the wireless slave terminal switches the connection destination from the MR1 to the master router RT2.

### SUMMARY OF THE INVENTION

A mechanism capable of performing more suitable control on connection destination change requests from access points (APs) is provided.

According to a first aspect of the present invention, there is provided an electronic apparatus as specified in claims 1 to 15. According to a second aspect of the present invention, there is provided a program as specified in claim 16. According to a third aspect of the present invention, there is provided a computer readable storage medium as specified in claim 17. According to a fourth aspect of the present invention, there is provided a method for controlling an electronic apparatus as specified in claim 18.

Further features of the present invention will become apparent from the following description of embodiments with reference to the attached drawings.

### BRIEF DESCRIPTION OF THE DRAWINGS

Fig. 1 is a diagram illustrating an example configuration of a system.
Figs. 2A and 2B are diagrams illustrating an example configuration of a multifunction peripheral (MFP).
Figs. 3A to 3D are diagrams illustrating examples of displays on an operation display unit of the MFP.
Figs. 4A and 4B are diagrams illustrating a configuration of a mobile terminal device.
Fig. 5 is a diagram illustrating a configuration of an access point.
Fig. 6 is a sequence diagram illustrating a process performed in response to a connection destination change request.
Fig. 7 is a flowchart illustrating an example of a process on a measurement request and a change request.
Fig. 8 is a flowchart illustrating an example of a process of storing a security method.
Fig. 9 is a flowchart illustrating an example of a determination process based on a security method.
Fig. 10 is a diagram illustrating an example of a screen for setting a limit for a security method.

### DESCRIPTION OF THE EMBODIMENTS

A request to change a connection destination access point (connection destination AP) from an access point (AP) sometimes includes a candidate AP that is unsuitable as a connection destination of a station (STA) to switch to. Thus, ingenuity is needed to switch the STA to a suitable AP. The present disclosure provides a mechanism capable of performing more suitable control on connection destination change requests from APs.

Example embodiments of the present disclosure will be described in detail hereinafter with reference to the drawings. It should be noted that the described embodiments are merely examples and are not intended to limit the scope of the invention unless otherwise specified. Although a plurality of features is described in the embodiments, not all of the plurality of features are essential for the disclosure, and the plurality of features may be arbitrarily combined. In the accompanying drawings, the same reference numerals are used to designate the same or similar components, and redundant descriptions thereof will be omitted. Each of the embodiments of the present invention described below can be implemented solely or as a combination of a plurality of the embodiments or features thereof where necessary or where the combination of elements or features from individual embodiments in a single embodiment is beneficial. System Configuration

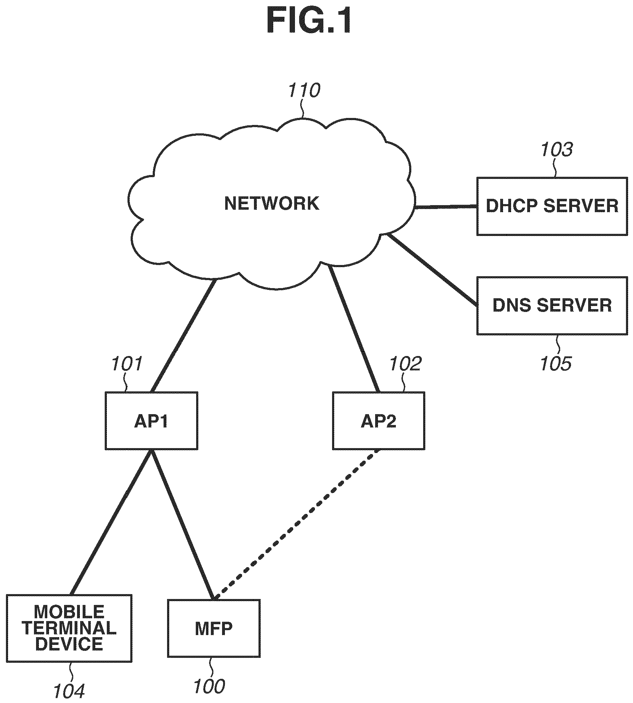

Fig. 1 illustrates an example configuration of a system according to the present embodiment. In one example, the system is a wireless communication system in which a plurality of communication devices can wirelessly communicate with each other. In the example illustrated in Fig. 1, the communication devices include a mobile terminal device 104, an MFP 100, access points AP1 (101) and AP2 (102), a dynamic host configuration protocol (DHCP) server 103, a domain name system (DNS) server 105, and a network 110. The mobile terminal device 104 is a device having a wireless communication function using a wireless local area network (LAN) or the like. The wireless LAN may be hereinafter referred to as a WLAN. The mobile terminal device 104 may be, for example, a personal information terminal such as a personal digital assistant (PDA), a mobile phone (smartphone), a digital camera, or a personal computer (PC).

The MFP is one type of an electronic apparatus and one type of an information processing apparatus. The MFP 100 is a printer having a printing function. The MFP 100 may also have a reading function (scanner), a facsimile transmission (fax) function, and a telephone function. In the present embodiment, the MFP 100 also has a communication function for wirelessly communicating with the mobile terminal device 104. The present embodiment describes the MFP 100, by way of example but not limitation. Instead of the MFP 100, any other device having a communication function, such as a scanner device, a projector, a mobile terminal, a smartphone, a laptop PC, a tablet terminal, a PDA, a digital camera, a music playing device, a television, or a smart speaker, may be used. MFP is an acronym for Multi Function Peripheral.

The access point AP1 (101) is disposed separately from (or outside) the mobile terminal device 104 and the MFP 100, and operates as a WLAN base station device. A communication device having a WLAN communication function can perform communication in infrastructure mode for WLANs via the access point AP1 (101). In the following description, the access points may be referred to as "APs". The infrastructure mode for WLANs may be referred to as "wireless infrastructure mode". The access point AP1 (101) performs wireless communication with a communication device (authenticated communication device) allowed to connect to the access point AP1 (101), and relays wireless communication between the communication device and another communication device. The access point AP1 (101) may be connected to, for example, a wired communication network and may relay communication between a communication device connected to the wired communication network and another communication device wirelessly connected to the access point AP1 (101).

The access point AP2 (102) has a function equivalent to that of the access point AP1 (101). The MFP 100 switches the connection from the access point AP1 (101) to the access point AP2 (102), if necessary. The DHCP server 103 is connected to the MFP 100 via the access point AP1 (101) and the network 110, and responds to a request from the MFP 100 to provide a service to the MFP 100. In Fig. 1, the DHCP server 103 is connected as a device different from the access points AP1 (101) and AP2 (102). However, the access points AP1 (101) and AP2 (102) may have a DHCP server function. The DNS server 105 is connected to the MFP 100 and the mobile terminal device 104 via the access point AP1 (101) and the network 110, and responds to a request from the MFP 100 or the mobile terminal device 104 to provide a service for name resolution. The network 110 may be the Internet, a closed network within a company, or a mobile telephone network.

### Appearance of MFP

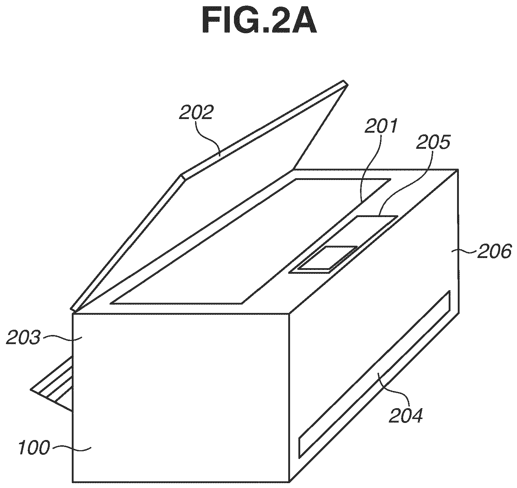

Fig. 2A illustrates an example appearance of the MFP 100. The MFP 100 includes, for example, a document table 201, a document cover 202, a print sheet insertion port 203, a print sheet discharge port 204, and an operation display unit 205. The document table 201 is a table on which a document to be read is placed. The document cover 202 is a cover to be closed to press a document placed on the document table 201 and prevent external leakage of light from a light source with which the document is irradiated during reading of the document. The print sheet insertion port 203 is an insertion port in which sheets of various sizes can be set. The print sheet discharge port 204 is a discharge port through which a printed sheet is discharged. The sheets set in the print sheet insertion port 203 are conveyed one by one to a printing unit 222 (described below), printed by the printing unit 222, and then discharged through the print sheet discharge port 204. The operation display unit 205 includes keys such as a character input key, a cursor key, an enter key, and a cancel key, a light-emitting diode (LED), a liquid crystal display (LCD), and so on. The operation display unit 205 is configured to accept operations performed by a user, such as the activation of various MFP functions and the setting of various settings. The operation display unit 205 may further include a touch panel display. The MFP 100 has a wireless communication function using a WLAN, and includes a wireless communication antenna 206 for wireless communication. The wireless communication antenna 206 may be invisible from the outside. Like the mobile terminal device 104, the MFP 100 can also perform wireless communication using a WLAN in a frequency band such as the 2.4 GHz or 5 GHz band.

### Configuration of MFP

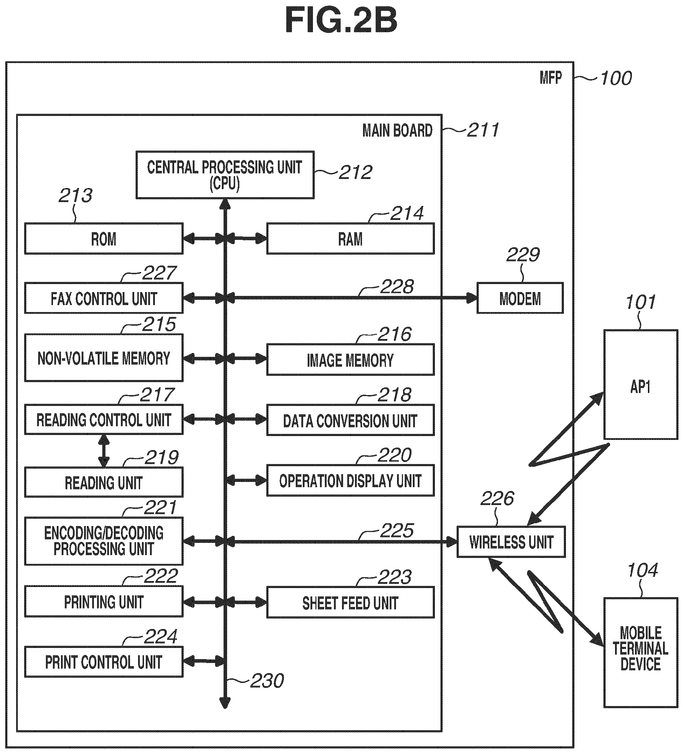

Fig. 2B illustrates an example configuration of the MFP 100. The MFP 100 includes a main board 211 for performing main control of the MFP 100, and a wireless unit 226. The wireless unit 226 is one communication module for performing WLAN communication by using at least one common antenna. The MFP 100 further includes a modem 229 for performing wired communication, for example. The main board 211 includes, for example, a central processing unit (CPU) 212, a read-only memory (ROM) 213, a random access memory (RAM) 214, a non-volatile memory 215, an image memory 216, a reading control unit 217, a data conversion unit 218, a reading unit 219, and an encoding/decoding processing unit 221. The main board 211 further includes, for example, the printing unit 222, a sheet feed unit 223, a print control unit 224, and an operation display unit 220.

The functional units in the main board 211 described above are connected to each other via a system bus 230 managed by the CPU 212. The main board 211 and the wireless unit 226 are connected via, for example, a dedicated bus 225. The main board 211 and the modem 229 are connected via, for example, a bus 228.

The CPU 212 is a system control unit including at least one processor, and controls the overall operation of the MFP 100. In one example, the processes of the MFP 100, which will be described below, are implemented by the CPU 212 executing a program stored in the ROM 213. Hardware dedicated for each of the processes may be provided. The ROM 213 stores a control program executed by the CPU 212, an embedded operating system (OS) program, and so on. In the present embodiment, the CPU 212 executes each control program stored in the ROM 213 under the management of the embedded OS stored in the ROM 213 to control software such as for scheduling and for switching tasks.

The RAM 214 includes a static random access memory (SRAM), for example. The RAM 214 stores data such as data of program control variables, setting values registered by the user, and data for managing the MFP 100. The RAM 214 may also be used as a buffer for various works. The non-volatile memory 215 includes a memory such as a flash memory, for example, and stores data continuously even after the power to the MFP 100 is turned off. The image memory 216 includes a memory such as a dynamic random access memory (DRAM). The image memory 216 stores image data received via the wireless unit 226, image data processed by the encoding/decoding processing unit 221, and so on. The memory configuration of the MFP 100 is not limited to the configuration described above. The data conversion unit 218 performs processing such as analysis of data in various formats and conversion from image data to print data.

The reading control unit 217 controls the reading unit 219 (e.g., a contact image sensor (CIS)) to optically read a document placed on the document table 201. The reading control unit 217 converts an image obtained by optically reading the document into electrical image data (image signal) and outputs the electrical image data. At this time, the reading control unit 217 may perform various kinds of image processing such as binarization and halftoning before outputting the image data.

The operation display unit 220 corresponds to the operation display unit 205 described with reference to Fig. 2A, and executes processing such as displaying on the display under display control by the CPU 212 and generating a signal in response to acceptance of a user operation.

The encoding/decoding processing unit 221 performs encoding processing, decoding processing, and enlargement/reduction processing of image data (such as Joint Photographic Experts Group (JPEG) data or Portable Network Graphics (PNG) data) handled by the MFP 100.

The sheet feed unit 223 holds sheets for printing. The sheet feed unit 223 can feed a set sheet under the control of the print control unit 224. The sheet feed unit 223 may include a plurality of sheet feed units to hold a plurality of types of sheets in a single device, and control can be performed to determine from which of the sheet feed units to feed a sheet under the control of the print control unit 224.

The print control unit 224 performs various kinds of image processing such as smoothing processing, print density correction processing, and color correction on image data to be printed, and outputs the processed image data to the printing unit 222. The printing unit 222 is configured to execute, for example, an inkjet printing process. The printing unit 222 ejects ink supplied from an ink tank through a print head and records an image on a recording medium such as a sheet of paper. The printing unit 222 may be configured to execute another printing process such as an electrophotographic printing process. Further, the print control unit 224 may periodically read information on the printing unit 222 and update, for example, status information stored in the RAM 214. The status information includes, for example, the remaining amount of the ink tank, and the state of the print head.

The wireless unit 226 is a unit capable of providing a WLAN communication function. For example, the wireless unit 226 can provide a function similar to that of a combination with a WLAN unit 401 of the mobile terminal device 104. That is, in accordance with the WLAN standard, the wireless unit 226 converts data into packets and transmits the packets to another device, or restores packets from another external device into original data and outputs the original data to the CPU 212. The wireless unit 226 can perform communication as a station conforming to the series of IEEE 802.11 standards. In particular, the wireless unit 226 can perform communication as an IEEE 802.11a/b/g/n/ac/ax station. In the following description, a station may be referred to as an STA. In addition, the wireless unit 226 can perform communication as a Wi-Fi Agile Multiband (registered trademark) STA.

The wireless unit 226 supports IEEE 802.11ax, or Wi-Fi 6 (registered trademark), and can perform processes compliant with IEEE 802.11ax. That is, the MFP 100 can perform one or both of processing of an STA supporting (or compatible with) OFDMA and an operation (processing) of an STA supporting (or compatible with) TWT. OFDMA is short for Orthogonal Frequency Division Multiple Access. TWT is short for Target Wake Time. Since the wireless unit 226 supports TWT, the timing of data communication from the master device to the STA is adjusted. The wireless unit 226 (i.e., the MFP 100) serving as an STA puts the communication function into sleep state when there is no need to wait for signal reception. This configuration can reduce power consumption. The wireless unit 226 also supports Wi-Fi 6E (registered trademark). That is, the wireless unit 226 can also perform communication over the 6 GHz band (5.925 GHz to 7.125 GHz). The 6 GHz band does not include a target band in which dynamic frequency selection (DFS) is implemented, which is included in the 5 GHz band. In the communication over the 6 GHz band, accordingly, communication disconnection caused by the DFS waiting time does not occur. As a result, it can be expected to perform more comfortable communication.

The mobile terminal device 104 and the MFP 100 can perform peer-to-peer (P2P) (WLAN) communication based on Wi-Fi Direct (WFD), and the wireless unit 226 has a software access point (Soft-AP) function or a group owner function. That is, the wireless unit 226 can establish a P2P communication network and determine a channel to be used for P2P communication.

### Operation Display Unit of MFP

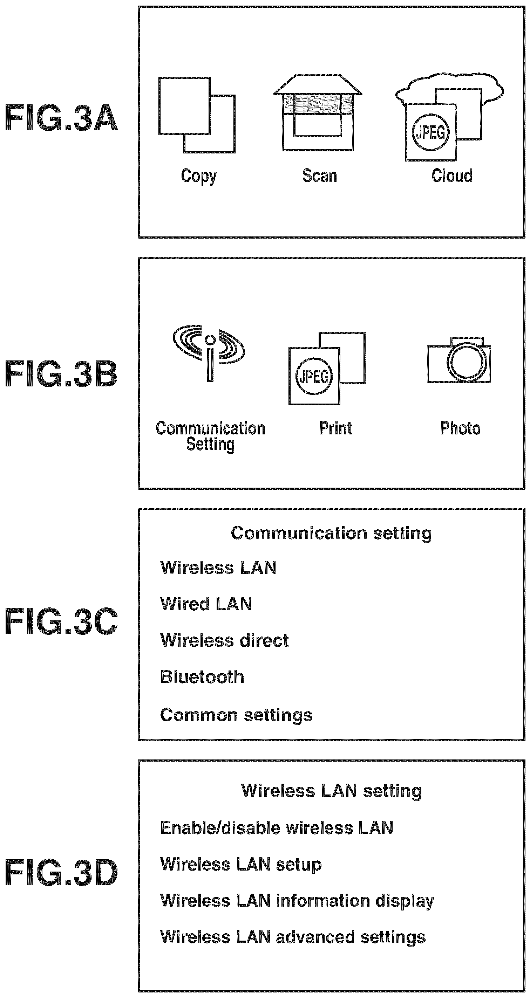

Figs. 3A to 3C schematically illustrate example screens displayed on the display (touch panel display) included in the operation display unit 220 of the MFP 100. Fig. 3A illustrates an example of a home screen displayed when operation such as printing or scanning does not take place after power to the MFP 100 is turned on (when the MFP 100 is in idle state or standby state). In Fig. 3A, display items (menu items) marked "Copy", "Scan", and "Cloud" are displayed. The item "cloud" is a menu item related to a cloud function using Internet communication. When one of the menu items is selected by a key operation or a touch panel operation, the MFP 100 can start implementing a corresponding setting or function. The MFP 100 accepts a key operation or a touch panel operation on the home screen illustrated in Fig. 3A to seamlessly display a screen different from that illustrated in Fig. 3A.

Fig. 3B illustrates a display example of another portion of the home screen. In response to an operation of displaying another page of the home screen (such as sliding from left to right or vice versa), a transition occurs from the state illustrated in Fig. 3A to a screen illustrated in Fig. 3B. In Fig. 3B, display items (menu items) marked "Communication setting", "Print", and "Photo" are displayed. When one of these menu items is selected, a function corresponding to the selected menu item, that is, one of a print function, a photo function, and communication setting, is implemented.

Fig. 3C illustrates a display example of a menu screen for communication setting, which is displayed when the communication setting is selected on the screen illustrated in Fig. 3B. The menu screen for communication setting displays menu items (options) "Wireless LAN", "Wired LAN", "Wireless direct", "Bluetooth", and "Common settings". The items "Wireless LAN", "Wired LAN", and "Wireless direct" are menu items for performing LAN setting, and one of these items is used to perform setting such as setting a wired connection, enabling or disabling the wireless infrastructure mode, or enabling or disabling the P2P mode such as WFD or Soft-AP mode. When the item "Wireless LAN" is selected and the wireless LAN is set to be enabled by a user operation, the wireless infrastructure mode is enabled. When the item "Wireless direct" is selected and wireless direct is set to be enabled by a user operation, the P2P (WLAN) mode is enabled. This screen also displays a "Common settings" menu related to each connection mode. On this screen, the user can further set the frequency band and the frequency channel for the wireless LAN.

Fig. 3D illustrates a display example of a menu screen for wireless LAN setting, which is displayed when the wireless LAN is selected on the screen illustrated in Fig. 3C. The menu screen for wireless LAN setting displays menu items (options) "Enable/disable wireless LAN", "Wireless LAN setup", "Wireless LAN information display", and "Wireless LAN advanced settings". The items allow the configuration of settings such as enabling or disabling the wireless infrastructure mode, setting up a wireless LAN, displaying wireless LAN information, or configuring wireless LAN advanced settings. Further, the items are displayed as interfaces capable of receiving user selection instructions.

### Appearance of Mobile Terminal Device

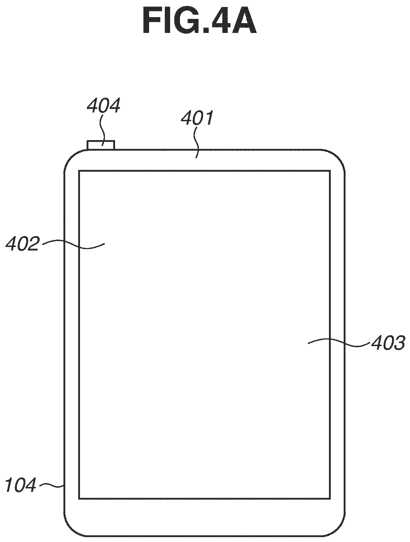

Fig. 4A is a diagram illustrating an example appearance of the mobile terminal device 104. In the present embodiment, as an example, the mobile terminal device 104 is a typical smartphone. The mobile terminal device 104 includes, for example, a display unit 402, an operation unit 403, and a power key 404. The display unit 402 is, for example, a display including an LCD display mechanism. The display unit 402 may display information by using, for example, an LED. The mobile terminal device 104 may have a function of outputting information by voice in addition to or instead of the display unit 402. The operation unit 403 includes hard keys such as keys and buttons, a touch panel, and so on to detect a user operation.

In the illustrated example, a common touch panel display is used to display information on the display unit 402 and accept a user operation by the operation unit 403. Thus, the display unit 402 and the operation unit 403 are implemented by a single device. In this case, for example, a button icon or a software keyboard is displayed using a display function of the display unit 402, and a touch by the user on the button icon or the software keyboard is detected by an operation accepting function of the operation unit 403. The display unit 402 and the operation unit 403 may be separate from each other, and hardware for display and hardware for operation acceptance may be separately provided. The power key 404 is a hard key for accepting a user operation for turning on or off the power to the mobile terminal device 104.

The mobile terminal device 104 includes a WLAN unit 401 that provides a WLAN communication function. The WLAN unit 401 may be invisible from the outside. The WLAN unit 401 is configured to execute data (packet) communication in a WLAN system conforming to, for example, the series of IEEE 802.11 standards (such as IEEE 802.11a/b/g/n/ac/ax).

In addition, the WLAN unit 401 can perform communication as a Wi-Fi Agile Multiband (registered trademark) AP. However, embodiments of the present disclosure are not limited to this configuration, and the WLAN unit 401 may be configured to execute communication in a WLAN system conforming to any other standard. In the illustrated example, it is assumed that the WLAN unit 401 can perform communication over both the 2.4 GHz and 5 GHz bands. It is also assumed that the WLAN unit 401 can execute communication based on WFD, communication in the Soft-AP mode, communication in the wireless infrastructure mode, and so on. Operations in these modes will be described below.

### Configuration of Mobile Terminal Device

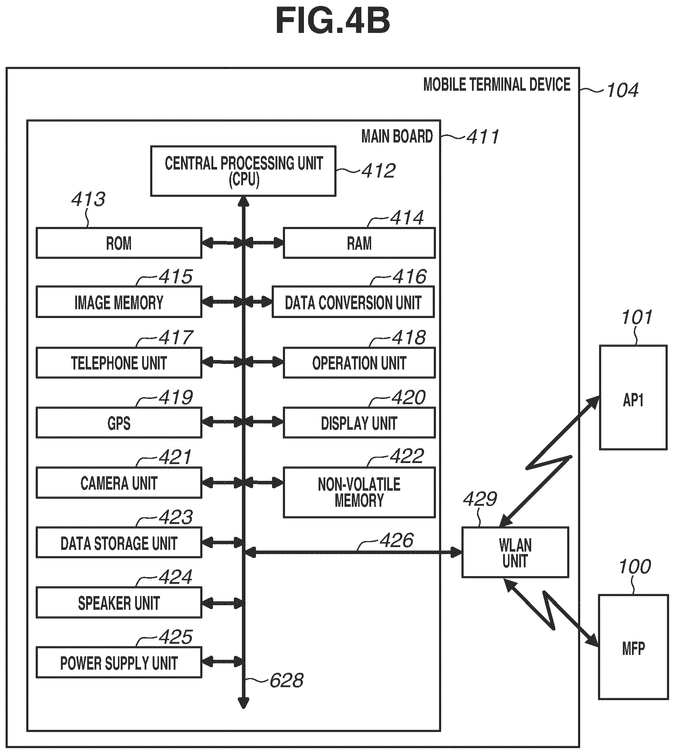

Fig. 4B illustrates an example configuration of the mobile terminal device 104. In one example, the mobile terminal device 104 includes a main board 411 for performing main control of the mobile terminal device 104, and a WLAN unit 429 that performs WLAN communication. The main board 411 includes, for example, a CPU 412, a ROM 413, a RAM 414, an image memory 415, a data conversion unit 416, a telephone unit 417, a GPS 419, a camera unit 421, a non-volatile memory 422, a data storage unit 423, a speaker unit 424, and a power supply unit 425. CPU is an acronym for Central Processing Unit, ROM is an acronym for Read Only Memory, RAM is an acronym for Random Access Memory, and GPS is an acronym for Global Positioning System. The mobile terminal device 104 further includes a display unit 420 and an operation unit 418. The functional units in the main board 411 described above are connected to each other via a system bus 628 managed by the CPU 412. The main board 411 and the WLAN unit 429 (the WLAN unit 401 described above) are connected to each other via, for example, a dedicated bus 426.

The CPU 412 is a system control unit including at least one processor, and controls the overall operation of the mobile terminal device 104. In one example, the processes of the mobile terminal device 104, which will be described below, are implemented by the CPU 412 executing a program stored in the ROM 413. Hardware dedicated for each of the processes may be provided. The ROM 413 stores a control program executed by the CPU 412, an embedded OS program, and so on. In the present embodiment, the CPU 412 executes each control program stored in the ROM 413 under the management of the embedded OS stored in the ROM 413 to control software such as for scheduling and for switching tasks.

The RAM 414 includes an SRAM, for example. The RAM 414 stores data such as data of program control variables, setting values registered by the user, and data for managing the mobile terminal device 104. The RAM 414 may also be used as a buffer for various works. The image memory 415 includes a memory such as a DRAM. The image memory 415 temporarily stores image data received via the WLAN unit 429 and image data read from the data storage unit 423 such that the CPU 412 processes the image data. The non-volatile memory 422 includes a memory such as a flash memory, for example, and stores data continuously even after the power to the mobile terminal device 104 is turned off. The memory configuration of the mobile terminal device 104 is not limited to the configuration described above. For example, the image memory 415 and the RAM 414 may be shared, or the data storage unit 423 may be used to back up data, for example. In the present embodiment, one example of the image memory 415 is a DRAM. However, any other storage medium such as a hard disk or a non-volatile memory may be used as the image memory 415.

The data conversion unit 416 performs analysis of data in various formats and data conversion such as color conversion and image conversion. The telephone unit 417 controls a telephone line and processes audio data input or output via the speaker unit 424 to implement telephone communication. The GPS 419 receives radio waves transmitted from satellites and acquires the position information such as the latitude and longitude of the current position of the mobile terminal device 104.

The camera unit 421 has a function of electronically recording and encoding an image input via a lens. The image data of an image captured by the camera unit 421 is stored in the data storage unit 423. The speaker unit 424 performs control to implement a function of inputting or outputting a voice for the telephone function or implement other functions such as an alarm notification. The power supply unit 425 is, for example, a portable battery and controls power supply to the mobile terminal device 104. The states of power supply include, for example, a depleted battery state in which the battery has no remaining capacity, a power-off state in which the power key 404 remains unpressed, an activated state in which the mobile terminal device 104 is normally activated, and a power-saving state in which the mobile terminal device 104 is activated and is in power saving mode.

The display unit 420 corresponds to the display unit 402 described with reference to Fig. 4A, and accepts various input operations and displays the operating state and status of the MFP 100, for example, under the control of the CPU 412. The operation unit 418 corresponds to the operation unit 403 described with reference to Fig. 4A. In response to a user operation, the operation unit 418 performs control to, for example, generate an electrical signal corresponding to the operation and output the electrical signal to the CPU 412.

In the mobile terminal device 104, the WLAN unit 429 is used to perform wireless communication and perform data communication with other devices such as the MFP 100. The WLAN unit 429 converts data into packets and transmits the packets to another device. Further, the WLAN unit 429 restores packets from another external device into original data and outputs the original data to the CPU 412. The WLAN unit 429 is a unit for implementing communication compliant with each WLAN standard. The WLAN unit 429 can operate concurrently in at least two communication modes including the wireless infrastructure mode and the P2P (WLAN) mode. The frequency bands used in these communication modes may be limited by hardware functions and capabilities.

### Configuration of Access Point

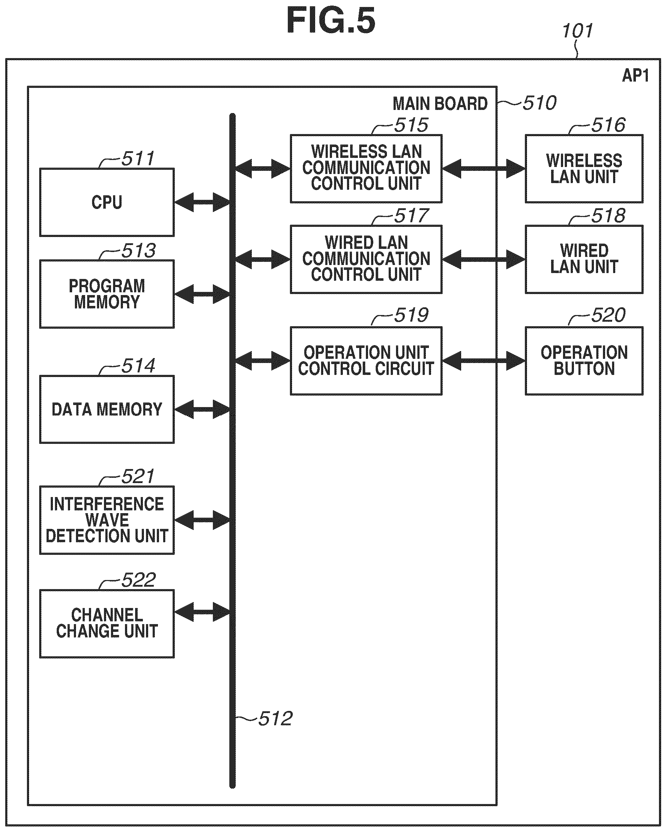

Fig. 5 is a block diagram illustrating the configuration of the access point AP1 (101) having a wireless LAN access point function. The access point AP1 (101) includes a main board 510 for controlling the access point AP1 (101), a wireless LAN unit 516, a wired LAN unit 518, and an operation button 520.

A CPU 511 is in the form of a microprocessor disposed on the main board 510 and operates in accordance with a control program stored in a program memory 513 in ROM form and the content of a data memory 514 in RAM form. The program memory 513 and the data memory 514 are connected to the CPU 511 via an internal bus 512. The CPU 511 controls the wireless LAN unit 516 through a wireless LAN communication control unit 515 to perform wireless LAN communication with other communication terminal devices. Further, the CPU 511 controls the wired LAN unit 518 through a wired LAN communication control unit 517 to perform wired LAN communication with other communication terminal devices. The CPU 511 can control an operation unit control circuit 519 to accept an operation from the user using the operation button 520. The CPU 511 includes at least one processor.

The access point AP1 (101) further includes an interference wave detection unit 521 and a channel change unit 522.

The interference wave detection unit 521 performs a process of detecting an interference wave during wireless communication performed over a band in which DFS is implemented. In response to detection of an interference wave during wireless communication performed over a band in which DFS is implemented, the channel change unit 522 performs a process of changing a channel to be used when, for example, the channel immediately needs to be changed to an available channel.

The access point AP2 (102) has a configuration similar to that of the access point AP1 (101).

### P2P Communication Method

Next, a brief description will be given of P2P (WLAN) communication method for allowing devices to wirelessly communicate directly with each other without using an external access point in WLAN communication. P2P (WLAN) communication can be implemented by using a plurality of methods. For example, a communication device supports a plurality of modes for P2P (WLAN) communication and selectively uses one of the plurality of modes to execute P2P (WLAN) communication.

The following two P2P modes are provided:
Soft-AP mode; and
WFD mode.

A communication device capable of executing P2P communication may be configured to support at least one of these modes. However, even a communication device capable of executing P2P communication need not support all of these modes, and may be configured to support only parts of these modes.

A communication device (e.g., the mobile terminal device 104) having a WFD communication function calls an application (or a dedicated application, if any) for implementing the communication function in response to a user operation accepted via an operation unit of the communication device. Then, the communication device displays a screen of a user interface (UI) provided by the application to prompt the user to perform an operation, and can execute WFD communication in response to the acceptance of the operation performed by the user.

### Soft-AP Mode

In the Soft-AP mode, a communication device (e.g., the mobile terminal device 104) operates in the role of a client that requests various services. Then, the other communication device (e.g., the MFP 100) operates as a Soft-AP that is set by software to implement the function of an AP in the WLAN. Since commands and parameters transmitted and received in a wireless connection established between the client and the Soft-AP are commands and parameters defined by the Wi-Fi (registered trademark) standard, a description thereof will be omitted. The MFP 100 operating in the Soft-AP mode operates as a master station and determines a frequency band and a frequency channel. Accordingly, the MFP 100 can select which frequency band to use from among the 5 GHz and 2.4 GHz bands and which frequency channel to use in that frequency band. WFD Mode

The MFP 100 may be activated as a fixed master station in the WFD mode (i.e., an autonomous group owner). In this case, a group owner (GO) negotiation process for determining the roles is not performed. In this case, furthermore, the MFP 100 operates as a master station and determines a frequency band and a frequency channel. Accordingly, the MFP 100 can select which frequency band to use from among the 5 GHz and 2.4 GHz bands and which frequency channel to use in that frequency band.

### Wireless Infrastructure Mode

In the wireless infrastructure mode, communication devices (e.g., the mobile terminal device 104 and the MFP 100) that communicate with each other are connected to an external AP (e.g., the access point AP1 (101)) that controls the network, and the communication between the communication devices is performed via the external AP. In other words, communication is performed between the communication devices via a network established by the external AP. The mobile terminal device 104 and the MFP 100 individually discover the access point AP1 (101), transmit a connection request to the access point AP1 (101), and connect to the access point AP1 (101). As a result, these communication devices can communicate with each other in the wireless infrastructure mode via the access point AP 1 (101). A plurality of communication devices may connect to different APs. In this case, data transfer is performed between the APs to allow communication between the communication devices. Since commands and parameters transmitted and received during communication between the communication devices via an access point or access points are commands and parameters defined by the Wi-Fi (registered trademark) standard, a description thereof will be omitted. In this case, the access point AP1 (101) determines a frequency band and a frequency channel. Accordingly, the access point AP1 (101) can select which frequency band to use from among the 5 GHz, 2.4 GHz, and 6 GHz bands and which frequency channel to use in that frequency band.

### Process in Response to Connection Destination Change Request from AP to STA

The mobile terminal device 104 and the MFP 100 support a feature publicly available as Wi-Fi Agile Multiband (registered trademark). The Wi-Fi Agile Multiband feature enables selection of an optimal environment in accordance with the changing situation of a Wi-Fi network. Specifically, a STA, such as the mobile terminal device 104 and the MFP 100, and an AP, such as the access point AP1 (101), exchange information on the network environment by using the series of IEEE 802.11 communication standards. The exchange of such information allows the AP to guide the STA to another AP, frequency band, or channel, or even to another cellular service in some cases (change the connection destination) when the network is congested.

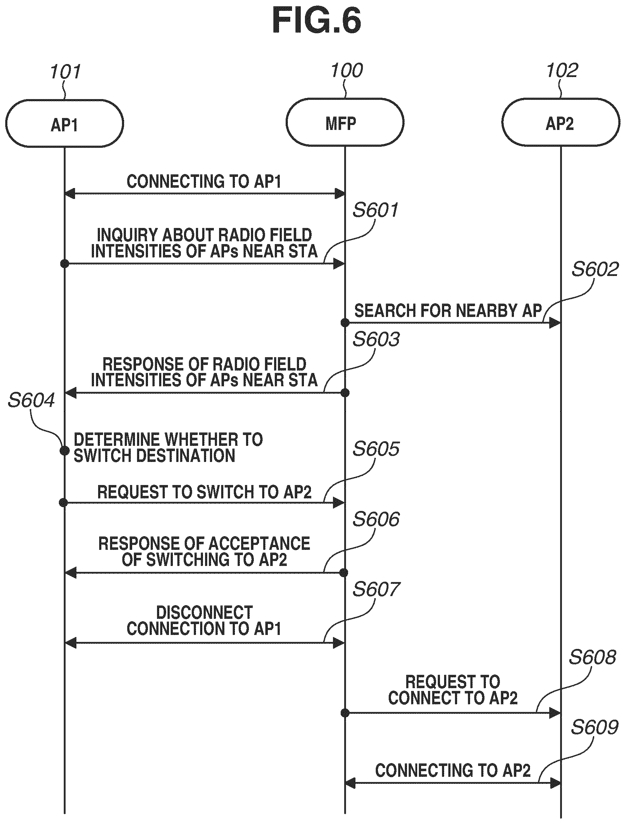

Fig. 6 is a sequence diagram of a process in which the MFP 100 switches a connection destination AP to connect to from the access point AP1 (101) to the access point AP2 (102) in accordance with a connection destination change request from the access point AP1 (101).

The processing executed by each device in the illustrated sequence is implemented by a CPU included in the device reading various programs stored in a memory such as a ROM included in the device into a RAM included in the device and executing the programs.

In the process illustrated in Fig. 6, in the initial state, the MFP 100 has established a connection with the access point AP1 (101) in the wireless infrastructure mode. When the MFP 100 and the access point AP1 (101) are connected to each other in the wireless infrastructure mode, the access point AP1 (101) has acquired information indicating whether the MFP 100 supports IEEE 802.11v. The following process is performed if information indicating that the MFP 100 supports IEEE 802.11v has been acquired by the access point AP1 (101).

In S601, the access point AP1 (101) transmits, to the MFP 100, an inquiry (measurement requests) about the radio field intensities of APs located near the MFP 100. The inquiry is transmitted as, for example, a beacon frame request or a beacon report request. That is, a request defined by the IEEE 802.11k standard can be used.

In S602, in response to the request received in S601, the MFP 100 receives frames transmitted from the APs located near the MFP 100 and measures the respective radio field intensities of the APs. As a result, the radio field intensity of each of a plurality of APs including the access points AP1 (101) and AP2 (102) is measured. This process is called an AP search.

In S603, the MFP 100 transmits a list of radio field intensities of the APs located near the MFP 100, which are measured in S602, as a response to the request received in S601. The radio field intensities to be transmitted as the response may be, in addition to or instead of the information measured in S602, information stored in, for example, the RAM 214 and the non-volatile memory 215 of the MFP 100. The response is transmitted as, for example, Beacon Report or measurement reports.

In S604, the access point AP1 (101) determines whether to switch the connection destination of the MFP 100, on the basis of the network congestion recognized by the access point AP1 (101) and the radio field intensities received from the MFP 100 in S603. Examples of the factors for the access point AP1 (101) to determine to change the connection destination include the following.
a large number of STAs connected to the access point AP1 (101) (at or above a threshold);
a large amount of communication between the access point AP1 (101) and STAs connected to the access point AP 101 (at or above a threshold);
the presence or absence of interfering radio waves that is determined based on a signal-to-noise (SN) ratio; and
a stoppage of the AP function.

Further, the determination of whether to switch the connection destination may be performed based on the congestion levels (number of connected STAs and amount of communication) of the APs that are determined through communication between the APs. In a case where it is determined to switch the connection destination of the MFP 100 and an SSID, channel, and frequency band of another AP designated as a connection destination to which the MFP 100 will switch are determined, the processing proceeds to S605. According to the present embodiment, an extended service set identifier (ESSID) of another AP designated (recommended) as a target access point for the switch is identical to the ESSID of the source AP (Basic Service Set Identifier (BSSID) is different for each AP). Alternatively, an AP with an ESSID different from the ESSID of the source AP may be recommended. The BSSID is identical in value to a media access control (MAC) address of the AP (i.e., identification information of the AP).

In S605, the access point AP1 (101) transmits an AP change request (connection destination change request) to the MFP 100. The connection destination change request includes information on the BSSID of the other AP (hereinafter referred to as a recommended AP) designated as the destination to which the MFP 100 is to be connected, the channel, and the frequency band, which are determined in S604. There may be a case where a plurality of BSSIDs is designated.

Specifically, a plurality of APs may be designated as the recommended APs for switching. The connection destination change request is transmitted as, for example, a basic service set (BSS) transition management (BTM) Request. That is, a BTM Request frame defined by the IEEE 802.11v standard is transmitted. In the example illustrated in Fig. 6, the access point AP2 (102) is designated as the destination (recommended AP) included in the connection destination change request.

In S606, if the MFP 100 follows the connection destination change request received in S605, the MFP 100 transmits to the access point AP1 (101) a response indicating acceptance of the switching of the connection destination. If the MFP 100 does not follow the connection destination change request, the MFP 100 may transmit a response indicating rejection of the switching of the connection destination. The response is transmitted as a BTM Response. In the example illustrated in Fig. 6, it is assumed that a response indicating acceptance of the switching of the connection destination is transmitted.

In S607, the access point AP1 (101) and the MFP 100 disconnect the connection in the wireless infrastructure mode.

In S608, the MFP 100 transmits a connection request to the access point AP2 (102) so as to connect to the access point AP2 (102) designated by the connection destination change request received in S605.

As a result, in S609, a connection between the MFP 100 and the access point AP2 (102) in the wireless infrastructure mode is established.

This mechanism allows the MFP 100 serving as an STAto change the connection destination from the access point AP1 (101) (AP before the connection destination change) to the access point AP2 (102) in accordance with a connection destination change request from the access point AP1 (101) to which the MFP 100 is originally connected. The access points AP1 (101) and AP2 (102) may be located in different locations. That is, through the process illustrated in Fig. 6, the MFP 100 can switch the connection destination from an AP to which the MFP 100 is originally connected to another AP installed at a different position. The access points AP1 (101) and AP2 (102) may support different frequency bands among a plurality of frequency bands (two or three of the 2.4 GHz, 5 GHz, and 6 GHz bands) provided by the same device. That is, through the process illustrated in Fig. 6, the MFP 100 can switch the frequency band to another frequency band provided by the same device as the AP to which the MFP 100 is originally connected. For example, the MFP 100 can change the connection destination to an AP in the 6 GHz band in response to a connection destination change request.

The present embodiment describes an example in which a measurement request and a connection destination change request are transmitted from an AP by using a mechanism compliant with Wi-Fi Agile Multiband (registered trademark) and an STA responds to these requests. However, the present disclosure is not limited to this example. The present embodiment is also applicable when an STA responds and changes a connection destination AP (switching, deletion, or addition of an AP serving as a connection destination) in response to a measurement request and a connection destination change request transmitted from an AP by using a mechanism different from that in the example described above.

There are situations where changing the connection destination AP based on the request to change the connection destination AP transmitted from the currently connected AP is acceptable and situations where it is not desirable. In situations where changing the connection destination AP based on the change request is not desirable, one of the processes described below or a combination of any of the processes may be performed as a process for preventing a change of the connection destination in response to the change request. The processes described below are a process for preventing changes to the connection destination AP based on the change request or a process for reducing the likelihood of changes occurring.

### First Suppressive Process

Even when the change request described in S605 is received, changing of the connection destination AP based on the received connection request is not performed, and no response to the change request is returned, or a response indicating rejection (indicating that the connection destination AP will not be changed) of the change request is transmitted to the currently connected AP. In the case of transmitting the response indicating rejection, the priority of changing a connection destination of another STA connected to the AP currently connected to the MFP 100 increases, and the priority of changing the connection destination of the MFP 100 having returned the response indicating rejection decreases, which consequently allows maintaining the connection with the currently connected AP. Further, in the case of returning no response (in the case of ignoring), the currently connected AP is expected to maintain the connection with the MFP 100 while waiting for a response until the response waiting time expires. Thus, in a situation where the connection is to be disconnected immediately upon receiving a response to the change request from the MFP 100, not responding, instead of returning a response, increases the time for which the connection with the currently connected AP can be maintained. Therefore, different processes may be implemented depending on the reason for the change based on information about the reason included in the change request. For example, if the reason is weak, a response indicating rejection may be returned, whereas if the reason is strong, the request may be ignored. The reason for the change is determined based on, for example, information included in a Request Mode in the BTM Request and indicating which one of several reasons applies. For example, in a case where the Disassociation Imminent bit in the Request mode or the BSS Termination Included bit is 1, the reason for the change in the change request is determined to be strong. Otherwise, the reason for the change is determined to be weak. Second Suppressive Process

In response to the measurement request described in S601, information indicating that the radio reception condition (signal reception condition) of an AP that is not the currently connected AP is of a low signal quality, which is different from an actually measured condition, is provided (false response is provided). In this case, a measurement may be performed upon receiving the measurement request to provide a response, or a response may be provided without performing a measurement.

Specifically, in the response (such as the beacon report) described in S603, a value obtained by reducing the received signal intensity from the measured signal quality of the signal received from the unconnected AP is provided, or/and a value with increased noise (signal-to-noise ratio) is provided. Alternatively, the response may omit at least one piece of information about the unconnected AP. Further, based on previous measurement information about the unconnected AP, a process of decreasing the received signal intensity to a significantly low value or responding with a value significantly increased in noise may be performed. Further, despite receiving the measurement request, a response including no unconnected AP information and only indicating that the received signal intensity and noise conditions of the currently connected AP are favorable may be provided without actually performing a measurement (AP search). Responding to the measurement request without including unconnected AP information corresponds to content indicating that no other unconnected APs have been discovered through the AP search. In other words, responding without including unconnected AP information corresponds to content indicating the signal quality from unconnected APs being different from the actual AP search results at least in part.

By performing the foregoing process, transmission of a request to change the connection destination from the currently connected AP to another AP is expected to be prevented. As a result, connection destination change based on a connection destination change request is prevented.

### Third Suppressive Process

After temporarily disconnecting from the currently connected AP, information indicating that the change request is unsupported is notified, and the connection is reestablished with the same AP. Specifically, the wireless connection to the currently connected AP is temporarily disconnected, and Association Request frame data including information indicating that IEEE 802.11v is unsupported is generated as a preparation for re-connecting wirelessly. Thereafter, a process of connecting to the AP is performed using the generated Association Request frame data. Thus, in a case where Association Request frame data including information indicating that IEEE 802.11v is unsupported is generated, the electronic apparatus connects to the AP as an electronic apparatus that does not support the Agile Multiband function. As a result, the currently connected AP recognizes that the MFP 100 does not support IEEE 802.11v and stops transmitting wireless connection destination change requests to the MFP 100. Since no requests to change the wireless connection are transmitted to the MFP 100, the wireless connection between the MFP 100 and the currently connected AP is more likely to be maintained. Further, in a case where the currently connected AP recognizes that the MFP 100 does not support IEEE 802.11v, transmission of measurement requests (requests described in S601) from the currently connected AP to the MFP 100 is also stopped. Therefore, measurements (AP searches) based on measurement requests and responses (process of S603) to measurement requests by the MFP 100 are also suppressed. As a result, the processing load is reduced, and the power consumption is also reduced. Further, resources can be allocated to other processes.

An example of a state where changing the connection destination AP based on a change request is not desirable is a state where print data is being received. A state where the MFP 100 is receiving print data is a state where part of the print data of images to be printed has been received from the mobile terminal device 104, which is a counterpart device, but the rest of the print data has not been received. The MFP 100 performs printing by repeating a process of receiving part of the print data to be printed on one sheet, printing the received part (e.g., receiving one line and printing the received one line), receiving subsequent data, and printing the received subsequent data. When the print data is being received, if the connection destination AP is changed based on a connection destination change request, a time lag occurs in the process of switching the connection destination, which may cause a decrease in print quality such as print inconsistencies. Further, communication with the mobile terminal device 104, which is the counterpart device, may become unreliable after the connection destination is switched, and this may lead to a failure in receiving the subsequent data, which could result in a printing failure. Thus, when the print data is being received, at least one of the first and second suppressive processes is performed as a process of preventing the connection destination from being changed based on the change request, or the third suppressive process described above is performed before print data reception begins.

Meanwhile, the connection destination change request received from the currently connected AP may include an AP, as a switching candidate for the connection destination, that is not suitable as a connection destination AP of a STA.

For example, an AP with lower security strength than the security strength of the currently connected AP may be included as a switching candidate for the connection destination. In this case, if the connection destination AP is switched based on a connection destination change request from the currently connected AP, the security strength of the connection to the AP may decrease. Thus, ingenuity is needed to switch the STA to a suitable connection destination AP.

According to the present embodiment, the MFP 100 connects to an AP based on a standard security strength method. Specifically, control is performed so that connecting to an AP that is a change destination candidate in the change request and uses a security method lower in strength than the standard security method is prevented. With the foregoing configuration, the STA is switched to a suitable connection destination AP.

Further, for example, an AP that uses a security method that is unsupported by the MFP 100 or restricted by a setting for the MFP 100 may be included as a switching candidate for the connection destination. In this case, if the connection destination AP is switched to the switching candidate AP based on the connection destination change request, the MFP 100 may fail to connect to the switching destination AP. Thus, ingenuity is needed to switch the STA to a suitable connection destination AP.

Therefore, according to the present embodiment, the MFP 100 performs control so that the process of changing the connection destination AP to an AP that is a change destination candidate in the change request and cannot be connected using a security method available for use by the MFP 100 is prevented.

Further, for example, an AP of a different authentication method from the authentication method before the switch may be included as a switching candidate for the connection destination. Specifically, an AP in an enterprise mode may be included as a recommended AP while the authentication method for the currently connected AP is a personal mode. Conversely, an AP of an authentication method different from enterprise, such as the personal mode, may be included as a recommended AP while the authentication method for the currently connected AP is the enterprise mode (authentication method using an authentication server). In this case, if the connection destination AP is switched to the switching candidate AP based on the connection destination change request, the MFP 100 may fail to maintain the security condition expected by the user, or may fail to connect to the switching destination AP. Thus, ingenuity is needed to switch the STA to a suitable connection destination AP. Therefore, according to the present embodiment, control is performed so that changing the connection destination to an AP of a different authentication method from the connected AP is prevented.

In the present specification, the request to change the connection destination AP the MFP 100 receives from the currently connected AP is sometimes referred to also as "connection destination change request" or "change request". Further, in the present specification, the request to change the connection destination AP is, in other words, a request to switch the connection destination AP.

### Process based on Request from Currently Connected AP

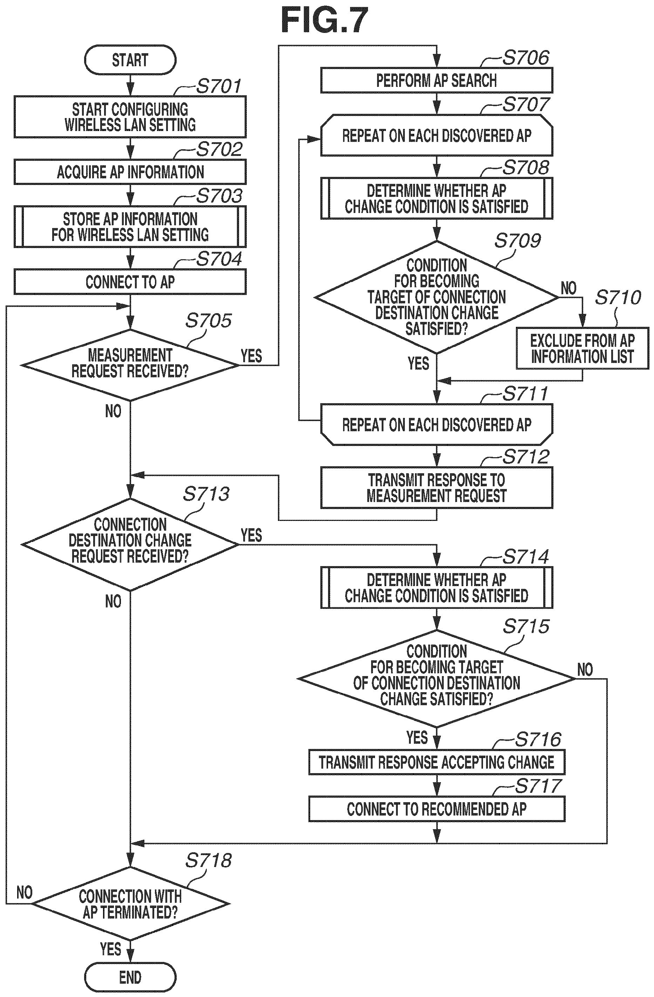

Fig. 7 is a flowchart illustrating an example of a process that corresponds to the AP search request and the connection destination change request that the MFP 100 executes. In the flowchart, the processes that the MFP 100 executes are implemented by the CPU 212 reading various programs stored in the memory such as the ROM 213 to the RAM 214 and executing the read programs.

In S701, the CPU 212 starts configuring the wireless LAN settings. Specifically, the CPU 212 receives an instruction to start configuring the wireless infrastructure mode. The instruction to start configuring the wireless infrastructure mode may be, for example, an instruction based on a user operation on the wireless LAN setting menu screen illustrated in Fig. 3D. The user operation may be, for example, an operation of selecting "wireless LAN setup" on the wireless LAN setting menu screen by the user. Further, the instruction to start configuring the wireless infrastructure mode may be based on receiving a specific signal from an external device such as the mobile terminal device 104.

In S702, the CPU 212 acquires AP information necessary for configuring the wireless infrastructure mode. Specifically, for example, the CPU 212 acquires AP information through an AP search. For example, in S702, the CPU 212 starts searching for APs by transmitting a device discovery request (Probe Request). Thereafter, the CPU 212 performs AP search and discovery by receiving wireless signals such as device discovery responses (Probe Response) and Beacons (information transmitted actively at regular intervals by APs) transmitted from APs. AP information acquired from an AP through the foregoing AP search includes information indicating at least one of an SSID, radio field intensity, frequency band, MAC address, authentication method, and encryption method of the AP. The content of the AP information varies depending on the model type, model number, and settings of the AP.

For example, in a case where security methods (authentication method, encryption method) used by an AP are not supported by the MFP 100, the CPU 212 may exclude the AP information from the AP search results. Further, in a case where security methods used by an AP are not supported by the MFP 100 and/or only include restricted security methods, the CPU 212 may exclude the AP information from the AP search results.

After completing the AP search in S702, the CPU 212 displays a list of APs discovered through the AP search on the operation display unit 220 of the MFP 100. The list of APs is content indicating the AP search results. The list of APs is displayed as, for example, an interface capable of receiving selection instructions from the user. For example, the CPU 212 may display an AP identification information list acquired through the AP search as the list of APs on the operation display unit 220. The AP identification information may be, for example, an SSID or device name. For example, in a case where an AP selected by the user uses a security method that requires authentication information such as a password, the CPU 212 receives input of a password for the AP selected by the user. As described above, the CPU 212 may acquire the password for the AP selected by the user by receiving the input of the password for the AP by the user. In a case where the AP selected by the user uses a security method that does not require passwords, the CPU 212 does not receive input of a password in S702. Examples of methods that do not require passwords include an OPEN method and an Extensible Authentication Protocol (EAP) method described below.

The present embodiment describes an example in which the CPU 212 displays the AP search results on the operation display unit 220 of the MFP 100 and receives the input of the password for the AP selected by the user. However, the present disclosure is not limited to this example. For example, the AP information in S702 may be acquired from the AP using a function referred to as Wi-Fi Protected Setup (hereinafter, "WPS") (registered trademark). Further, the AP information in S702 may be acquired from an external device such as the mobile terminal device 104 using a function referred to as Wi-Fi Easy Connect (hereinafter, "WEC") (registered trademark). Further, the AP information in S702 and the AP selection instruction from the user may be acquired by receiving specific signals from an external device such as the mobile terminal device 104.

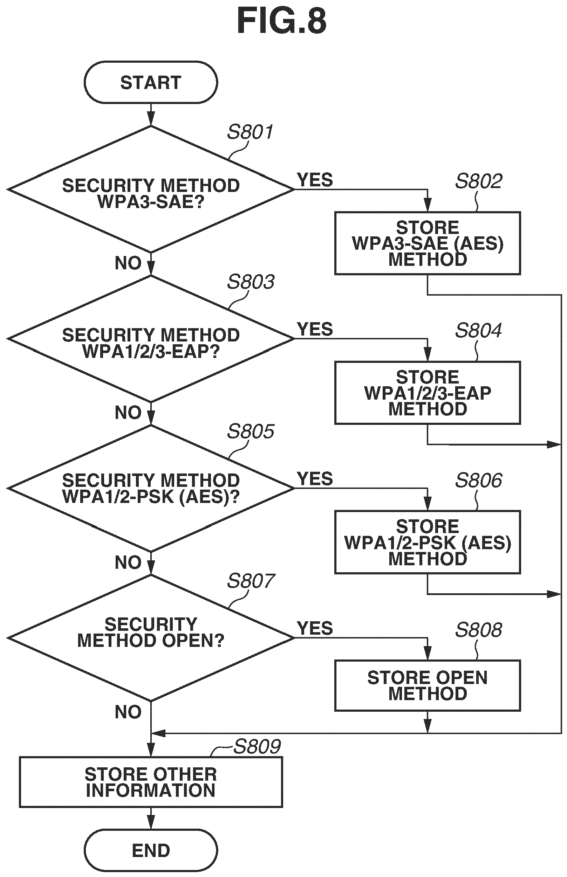

In S703, the CPU 212 performs control (recording control) so that the AP information necessary for configuring the wireless infrastructure mode is recorded in the RAM 214 and/or the non-volatile memory 215 based on the AP information acquired in S702. Details of this process will be described below with reference to Fig. 8. In storing the AP information in the process, information indicating the authentication method and the encryption method of the AP are collectively stored as a security method. The AP information necessary for configuring the wireless infrastructure mode that is stored in S703 includes, for example, one or more of an SSID, password, security method (authentication method and/or encryption method), frequency band, channel, communication standard, certificate information, and user name. The SSID is one or both of an ESSID and a BSSID. The foregoing information is stored based on user operations on the operation display unit 220 of the MFP 100 or specific signals received from the AP or an external device such as the mobile terminal device 104.

In S704, the CPU 212 performs a connection process to connect to the AP in accordance with the IEEE 802.11 standards using the AP information acquired in S702. The connection target AP in S704 is the AP selected based on the user instruction in S702.

In S705, the CPU 212 determines whether a measurement request is received from the currently connected AP. In a case where the CPU 212 determines that a measurement request is received (YES in S705), the processing proceeds to S706. Otherwise (NO in S705), the processing proceeds to S713. The measurement request herein corresponds to the inquiry (measurement requests) about the radio field intensities described above in S601. The measurement request is, in other words, a request for the AP search results and is also a request for the measurement results of radio wave conditions (signal quality) of nearby APs near the MFP 100.

In S706, the CPU 212 performs an AP search as described above in S602 and S702. The CPU 212 stores a list of AP information discovered through the AP search in the RAM 214.

The following processes of S707 to S711 are performed on each AP discovered through the AP search. An AP discovered through the AP search may be included as an AP recommended as a connection destination AP in the change request received from the currently connected AP. That is to say, an AP discovered through the AP search is also a candidate AP being a candidate for the connection destination AP of the MFP 100. The processes of S708 and S709 are processes for determining whether the AP discovered through the AP search is a suitable candidate AP for the connection destination of the MFP 100. Further, the process of S710 is a process for preventing transmission of a connection request including an unsuitable connection destination AP by providing a false response as in the second suppressive process with respect to the AP information that is not a suitable connection destination. That is to say, the processes of S707 to S711 are processes for preventing the MFP 100 from connecting to an AP that is not desirable as a connection destination. The processes of S707 to S711 are, in other words, processes for changing the MFP 100 to a suitable connection destination AP. Instead of the AP search in S706, the CPU 212 may perform the processes of S707 to 712 using stored AP information from a previous search.

In S707, the CPU 212 starts the process of repeating S708 to S710 on each AP discovered through the AP search in S706.

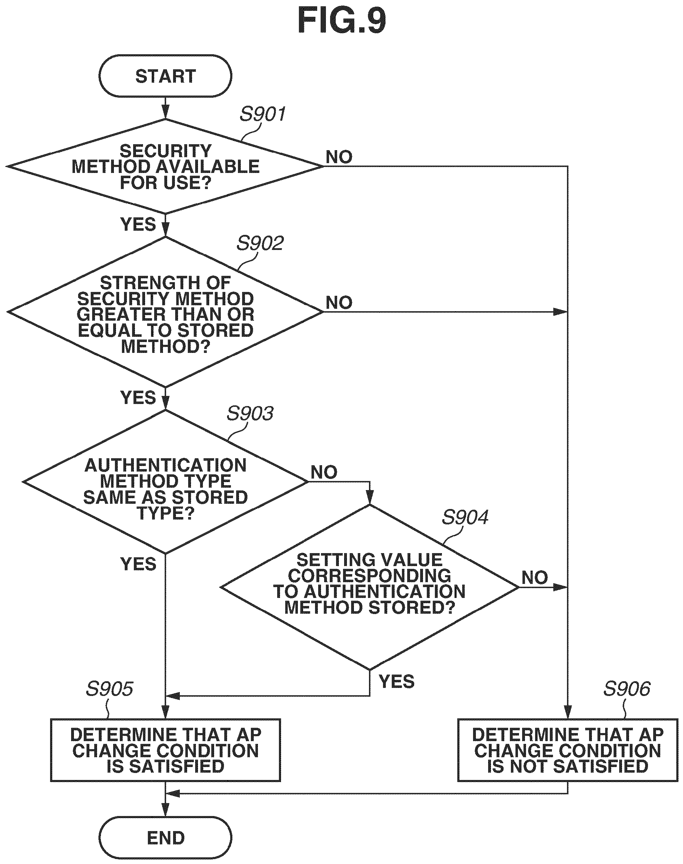

In S708, the CPU 212 determines whether the AP discovered through the AP search satisfies a predetermined condition and stores the determination result. The predetermined condition is a condition for determining whether the AP is desirable as a target connection destination. That is to say, in S708, the CPU 212 determines whether the AP discovered through the AP search is suitable as a target AP for changing the connection destination. Details of this process will be described below with reference to Fig. 9.

In S709, the CPU 212 determines whether the condition for becoming a target connection destination AP after changing the connection destination AP is satisfied, based on the determination result of S708. In a case where the CPU 212 determines that the condition for becoming a target is satisfied (YES in step S709), the processing proceeds to S711. On the other hand, in a case where the CPU 212 determines that the condition for becoming a target is not satisfied (NO in step S709), the processing proceeds to S710. Specifically, the CPU 212 performs the determination based on information (determination result) stored in S905 or S906 described below. That is to say, in a case where the determination result is as in S905 described below, the processing proceeds to S711, whereas in a case where the determination result is as in S906 described below, the processing proceeds to S710.

In S710, the CPU 212 changes the content of the AP information list stored in S706 to different content. For example, the CPU 212 excludes (deletes) the AP information that does not satisfy the condition for becoming a target from the AP information list, or the CPU 212 changes the AP information from the AP information list stored in S706 that does not satisfy the condition for becoming a target to different information from the actually measured condition. The different information refers to information indicating lower signal quality than the signal quality actually measured in the AP search. This process is described above in the second suppressive process. The signal quality is, in other words, a radio wave condition, and examples include radio field intensities.

As described above, in a case where an AP discovered through the AP search does not satisfy the condition for becoming a connection destination AP, the CPU 212 excludes the AP that does not satisfy the condition from the AP search results, or the CPU 212 changes the information about the AP that does not satisfy the condition to information different from the actually measured results. This prevents inclusion of APs, as recommended APs, that do not satisfy the condition for becoming a target in the connection destination change request transmitted from the AP currently connected to the MFP 100. That is to say, the connection destination of the MFP 100 is prevented from being changed to an AP that does not satisfy the condition of the security method.

In S711, the CPU 212 continues to repeat the processes of S708 and S709 or processes of S708 to S710 on another AP discovered through the AP search in S706. In a case where the processes on all APs discovered through the AP search in S706 are finished, the processing proceeds to S712.

In S712, the CPU 212 transmits a response to the measurement request to the currently connected AP as described above in S603 in Fig. 6. For example, in a case where the process of S710 has been performed, since the content is different from the AP search results, the AP information list is transmitted as a false response in S712.

In S713, the CPU 212 determines whether a connection destination change request is received from the currently connected AP. This change request corresponds to the request that the access point AP1 (101) transmits in S605 in Fig. 6. In a case where the CPU 212 determines that a change request is received (YES in S713), the processing proceeds to S714. Otherwise (NO in S713), the processing proceeds to S718.

In S714 to S716, the CPU 212 determines whether to change the connection destination to the recommended AP included in the change request, and in situations where changes are unsuitable, performs a process of preventing the connection destination from being changed in response to the change request. This process corresponds to the first suppressive process described above.

In S714, the CPU 212 determines whether the recommended AP included in the received change request satisfies a predetermined condition. The predetermined condition is a condition for determining the suitability (appropriateness) as a target AP for changing the connection destination. That is to say, in S714, the CPU 212 determines whether the recommended AP is suitable as a target AP for changing the connection destination. Details of this process will be described below with reference to Fig. 9.

In S715, the CPU 212 determines whether the recommended AP included in the change request satisfies the condition for becoming a target AP after the change of the connection destination AP, based on the determination result of S714.

In a case where the condition for becoming a target is satisfied (YES in S715), the processing proceeds to S716. Otherwise (NO in S715), the processing proceeds to S718. Specifically, in a case where the determination result is as in S905 described below, the processing proceeds to S716, whereas in a case where the determination result is as in S906 described below, the processing proceeds to S718.

In S715, in a case where the CPU 212 determines that the condition for becoming a target is not satisfied (NO in S715), a response indicating rejection may be transmitted to the currently connected AP without connecting to the recommended AP as described above in the first suppressive process. The indication of rejection means, in other words, not changing the connection destination AP. Further, in a case where the CPU 212 determines that the condition for becoming a target is not satisfied, the change request may be ignored without returning a response.

In S716, the CPU 212 transmits a response indicating acceptance of the received connection destination change request to the currently connected AP, and the processing proceeds to S717. This process corresponds to the process of S606 in Fig. 6.

In S717, the CPU 212 disconnects the connection with the currently connected AP and performs a process of connecting to the recommended AP (recommended AP determined to satisfy the condition for becoming a target in S714) included in the connection destination change request. This process corresponds to the processes of S607 and S608 in Fig. 6.

As described above, in a case where the recommended AP does not satisfy the condition for the connection destination AP, the CPU 212 performs control so that a response indicating rejection to the change request is transmitted to the AP currently connected to the MFP 100 or the change request is ignored (NO in S715). This prevents the connection destination AP from being changed to an AP that is a recommended AP as a change destination candidate AP and uses a security method not suitable for the MFP 100. On the other hand, in a case where the recommended AP satisfies the condition for the connection destination AP, a response indicating acceptance of the change request is transmitted, and a process of connecting to the recommended AP is performed (YES in S715, S716 to S717). The foregoing control by the CPU 212 makes it possible for the MFP 100 to connect to a suitable AP.

In S718, the CPU 212 determines whether to terminate the connection with the currently connected AP. In a case where the CPU 212 determines to terminate the connection (YES in S718), the process illustrated in Fig. 7 is terminated. On the other hand, in a case where the CPU 212 determines not to terminate the connection (NO in S718), the processing proceeds to S705. Specifically, for example, the CPU 212 determines whether an instruction to turn off the MFP 100 is received. The instruction to turn off may be an instruction based on the absence of an operation on the operation display unit 220 of the MFP 100 for a predetermined time, or may be an instruction based on an operation on a power button (not illustrated) of the MFP 100.

Fig. 7 illustrates an example in which both the processes of S707 to S711 (second suppressive process) and the processes of S714 to S716 (first suppressive process) are performed. However, the present disclosure is not limited to this example. For example, only one of the processes of S707 to S711 (second suppressive process) and the processes of S714 to S716 (first suppressive process) may be performed without performing the other.

### Process of Storing Security Method for Use in Connecting to AP

Fig. 8 is a flowchart illustrating an example of a process of storing information indicating the authentication method and the encryption method of the AP collectively as a security method for use in connecting to the AP when the wireless infrastructure mode of the MFP 100 is configured. In the flowchart, the processes that the MFP 100 executes are implemented by the CPU 212 reading various programs stored in the memory such as the ROM 213 to the RAM 214 and executing the read programs. This process is executed in S703 in a case where the AP information is acquired in S702.

Security methods will be described below. The following security methods are used in wireless communication using a wireless LAN based on IEEE 802.11 standards.

### <Authentication Methods>

Examples of authentication methods supported by wireless APs include the following types:
(1) Pre Shared Key (PSK) method using a pre shared key;
(2) Simultaneous Authentication of Equals (SAE) method using SAE; and
(3) Extensible Authentication Protocol (EAP) method of authenticating communication apparatuses connecting to a network using an IEEE 802.1X/EAP authentication server. Examples of the security methods that use the PSK (1) include the following methods:
   (1-1) Wi-Fi Protected Access (WPA)-PSK; and
   (1-2) WPA2-PSK method.

The PSK method is a personal method, and the authentication method (category of authentication, type of authentication, category of security) of the PSK method differs from that of an enterprise method.

Further, examples of the security methods that use the SAE (2) include the following method:
(2-1) WPA3-SAE method.

Further, examples of the security methods that use the authentication server (3) include the following methods:
(3-1) WPA-EAP;
(3-2) WPA2-EAP; and
(3-3) WPA3-EAP method.

The security methods that use the authentication server are authentication methods for enterprise, and the authentication methods (category of authentication, type of authentication, category of security) of the security methods differ from those for personal.

### <Encryption methods>

Examples of encryption methods include the following methods:
Counter mode with Cipher Block Chaining Message Authentication Code (CBC-MAC)
Protocol (CCMP) method using Advanced Encryption Standard (AES);
temporal Key Integrity Protocol (TKIP) method using Rivest Cipher 4 (RC4); and
Wired Equivalent Privacy (WEP) method.

In the present specification, EAP refers to Extensible Authentication Protocol.

The above-described security methods (authentication method, encryption method) that are relatively secure are, for example, the WPA3-SAE method (2-1) and the WPA/WPA2/WPA3-EAP methods (3-1) to (3-3). Next, the methods that are secure next to the relatively secure methods are the WPA/WPA2-PSK methods (1-1) and (1-2). Further, examples of the security methods that are relatively insecure include the WEP method. Further, the method that is insecure is OPEN (without authentication). Further, the encryption methods that use AES are relatively secure methods, the TKIP method is a relatively insecure method, and the method without encryption is an insecure method.

The security methods that are supported by the MFP 100 vary depending on the model type, model number, and settings of the MFP 100. Examples of the security methods that are supported by the MFP 100 according to the present embodiment include WPA-PSK, WPA2-PSK, WPA3-SAE, WPA-EAP, WPA2-EAP, WPA3-EAP, and OPEN (without authentication, without encryption). Further, examples of the security methods that are not supported by the MFP 100 include methods using TKIP or WEP as an encryption method.

In S801, the CPU 212 determines whether the authentication method used to connect to the AP is the WPA3-SAE method. For example, the CPU 212 determines the authentication method used by the AP for which the selection instruction from the user is received, based on the AP information acquired in S702. In a case where the CPU 212 determines that the authentication method is the WPA3-SAE method (YES in S801), the processing proceeds to S802. On the other hand, in a case where the CPU 212 determines that the authentication method is not the WPA3-SAE method (NO in S801), the processing proceeds to S803.

In S802, the CPU 212 stores the relatively secure method (WPA3-SAE method) as the security method in the RAM 214 and/or the non-volatile memory 215.

In S803, the CPU 212 determines whether the authentication method used to connect to the AP is at least one of the WPA-EAP method, the WPA2-EAP method, and the WPA3-EAP method. For example, the CPU 212 determines the authentication method used by the AP for which the selection instruction from the user is received, based on the AP information acquired in S702. In a case where the CPU 212 determines that the authentication method used to connect to the AP is at least one of the WPA-EAP method, the WPA2-EAP method, and the WPA3-EAP method (YES in S803), the processing proceeds to S804. On the other hand, in a case where the CPU 212 determines that the authentication method used to connect to the AP is none of the WPA-EAP method, the WPA2-EAP method, and the WPA3-EAP method (NO in S803), the processing proceeds to S805.

In S804, the CPU 212 stores "relatively secure method (WPA/WPA2/WPA3-EAP method)" as the security method in the RAM 214 and/or the non-volatile memory 215.

In S805, the CPU 212 determines whether the authentication method used to connect to the AP is at least one of the WPA-PSK method and the WPA2-PSK method. For example, the CPU 212 determines the authentication method used by the AP for which the selection instruction from the user is received, based on the AP information acquired in S702. In a case where the CPU 212 determines that the authentication method is at least one of the WPA-PSK method and the WPA2-PSK method (YES in S805), the processing proceeds to S806. On the other hand, in a case where the CPU 212 determines that the authentication method is neither the WPA-PSK method nor the WPA2-PSK method (NO in S805), the processing proceeds to S807.

In S806, the CPU 212 stores "moderately secure method (WPA/WPA2-PSK method)" as the security method in the RAM 214 and/or the non-volatile memory 215.

In S807, the CPU 212 determines whether the authentication method used to connect to the AP is the OPEN (without authentication) method. For example, the CPU 212 determines the authentication method used by the AP for which the selection instruction from the user is received, based on the AP information acquired in S702. In a case where the CPU 212 determines that the authentication method is the OPEN method (YES in S807), the processing proceeds to S808. On the other hand, in a case where the CPU 212 determines that the authentication method is not the OPEN method (NO in S807), the processing proceeds to S809.

In S808, the CPU 212 stores "insecure method (OPEN method)" as the security method in the RAM 214 and/or the non-volatile memory 215.

In S809, the CPU 212 records other setting information (setting details) about the wireless infrastructure mode in the RAM 214 and/or the non-volatile memory 215. The setting information refers to, for example, AP information necessary for configuring the wireless infrastructure mode. In this process, the security methods are stored collectively for each authentication method type of the APs. Thus, in a case where the strength of the security method of the recommended AP is of the same type as the strength of the security method of the MFP 100, it is possible to connect to an AP with the same settings, such as the ESSID or the password.

The security methods used to connect to APs by the MFP 100 may be limited by receiving user operations on the operation display unit 220 of the MFP 100 or specific signals from an external device such as the mobile terminal device 104.

Fig. 9 is a flowchart illustrating an example of a process for determining whether the determination target AP satisfies the predetermined condition for the connection destination AP. That is to say, Fig. 9 illustrates an example of a process for determining whether the determination target AP is suitable for an AP after changing the connection destination. Further, in the flowchart, the processes that the MFP 100 executes are implemented by the CPU 212 reading various programs stored in the memory such as the ROM 213 to the RAM 214 and executing the read programs.

The process in Fig. 9 is executed in S708 and S714 in Fig. 7. That is to say, the process is executed on APs discovered through the AP search based on the measurement request and recommended APs included in the change request. That is to say, the process is executed when the determination of whether to change the connection destination AP is performed.

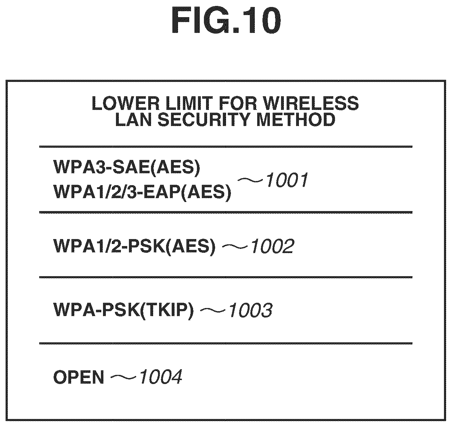

In S901, the CPU 212 determines whether the security method of the determination target AP that is a candidate for the connection switching destination (hereinafter, the AP will be referred to as "candidate AP") is a method available for use by the MFP 100. In a case where the CPU 212 determines that the security method is a method available for use (YES in S901), the processing proceeds to S902. On the other hand, in a case where the CPU 212 determines that the security method is not a method available for use (NO in S901), the processing proceeds S906. Specifically, for example, in a case where the security method used in the network formed by the candidate AP is a method that is supported by the MFP 100 and is not restricted in use by the MFP 100, the CPU 212 determines that the security method is a method available for use. Further, in a case where the security method used by the candidate AP is at least one of a method that is unsupported by the MFP 100 and a method that is restricted in use by the MFP 100, the CPU 212 determines that the security method is not a method available for use. As described above, the security methods that are supported by the MFP 100 vary depending on the model type, model number, and settings of the MFP 100. Further, the security methods that are supported by the MFP 100 are, for example, stored in advance in the non-volatile memory 215. Further, the security methods available for use by the MFP 100 may be restricted by, for example, settings based on user operations as described below with reference to Fig. 10.

As described above, in addition to whether the security method is supported by the MFP 100, in a case where the security method is supported by the MFP 100 but restricted in use due to settings, the determination result is NO in S901. This prevents the connection destination AP from being changed when the change request from the currently connected AP is received by the MFP 100 in a case where the security method of the candidate AP is not a method available for use by the MFP 100.

The present embodiment describes an example in which whether the security method is restricted in use in MFP 100 is added to the condition in the determination in S901, in addition to whether the security method is supported by the MFP 100. However, the present disclosure is not limited to this example. For example, in S901, the CPU 212 may only determine whether the security method is supported by the MFP 100, without determining whether the security method is restricted in use in the MFP 100. For example, a form may be employed in which, in a case where the CPU 212 determines that the security method of the determination target AP is a method supported by the MFP 100, the processing proceeds to S902, whereas in other cases, the processing proceeds to S906.

In S902, the CPU 212 determines whether the security strength of the security method of the candidate AP is greater than or equal to the strength of the security method stored in S703 in Fig. 7 (refer to Fig. 8). In a case where the CPU 212 determines that the strength of the method is greater than or equal to the stored security method (YES in S902), the processing proceeds to S903. Otherwise (NO in S902), the processing proceeds to S906.

A specific example of S902 will be described below. For example, if the CPU 212 stores "WPA1/2-PSK method" as the security method in S703 in Fig. 7, and the strength of the security method of the candidate AP is "WPA3-SAE" or "WPA1/2-PSK method", the processing proceeds to S903. Further, if the CPU 212 stores "WPA1/2-PSK method" in S703, and the strength of the security method of the candidate AP is "OPEN", the processing proceeds to S906. Further, for example, if the CPU 212 records "WPA3-SAE" in S703, and the strength of the security method of the candidate AP is "WPA3-SAE", the processing proceeds to S903. Further, if the CPU 212 records "WPA3-SAE" in S703, and the strength of the security method of the candidate AP is "WPA1/2-PSK method", the processing proceeds to S906.

As described above, in a case where the strength of the security method used by the candidate AP is lower than the strength of the security method of the currently connected AP, the candidate AP is determined as an AP that does not satisfy the condition for the connection destination AP. This prevents the connection destination AP from being changed to an AP lower in security strength than the currently connected AP in a case where the change request from the currently connected AP is received by the MFP 100. On the other hand, in a case where the security strength of the security method used by the candidate AP is greater than or equal to the security strength of the security method of the currently connected AP, the candidate AP is determined as an AP that satisfies the condition for the connection destination AP.

In S903, the CPU 212 determines whether the type (e.g., PSK method, SAE method, EAP method, OPEN method) of the authentication method of the candidate AP is the same as the stored authentication method type. In a case where the CPU 212 determines that the type of the authentication method is the same (YES in S903), the processing proceeds to S905. Otherwise (NO in S903), the processing proceeds to S904.

A case where, for example, the security method stored in the process in Fig. 8 (security method that is set at the time of configuring the wireless infrastructure mode) is one of the WPA-PSK (1-1) and the WPA2-PSK method (1-2) described above will be considered. In this case, if the security method of the candidate AP is one of the WPA-PSK (1-1) and the WPA2-PSK method (1-2), since the authentication method types are the same PSK, the determination result of S903 is Yes. That is to say, for example, in a case where the security method stored in the process in Fig. 8 is the WPA-PSK (1-1) and the security method of the candidate AP is the WPA2-PSK method (1-2), the determination result of S903 is YES.

On the other hand, a case where, for example, the security method stored in Fig. 8 is one of the WPA-PSK (1-1) and the WPA2-PSK method (1-2) described above will be considered. In this case, if the security method of the candidate AP is the WPA3-SAE method (2-1), since the authentication method types are PSK and SAE, the determination result of S903 is NO. Similarly, in a case where the method stored in the process in Fig. 8 is one of the WPA-PSK (1-1) and the WPA2-PSK method (1-2) described above and the method of the candidate AP is the WPA-EAP (3-1) or the WPA2-EAP (3-2), the determination result of S903 is NO. Further, in a case where the security method stored in the process in Fig. 8 corresponds to one of the personal mode and the enterprise mode while the type of the security method of the candidate AP corresponds to the other one of the personal mode and the enterprise mode, the authentication method types differ.

In S904, the CPU 212 determines whether setting values corresponding to the authentication method (e.g., SAE method, PSK method, EAP method, OPEN method) of the candidate AP are recorded. In a case where the CPU 212 determines that the corresponding setting values are stored (YES in S904), the processing proceeds to S905. On the other hand, in a case where the CPU 212 determines that the corresponding setting values are not stored (NO in S904), the processing proceeds to S906.

The setting values corresponding to the authentication method will be described below. Examples of setting values necessary for the SAE method include passwords. Examples of setting values necessary for the PSK method include passwords and pre shared keys (PSKs). Examples of setting values necessary for the EAP method include user names, login names, and certificates. EAP refers to the enterprise mode. The setting values are, in other words, information required based on the authentication method type when the MFP 100 connects to the AP. The setting values corresponding to the authentication method are stored in, for example, the process of S703. The setting values are stored in, for example, S809 in Fig. 8 executed as the process of S703. As described above, even in a case where the type of the authentication method used with the AP currently connected to the MFP 100 and the type of the authentication method used with the candidate AP differ from each other, if information required for establishing a connection between the different types is acquired, it is determined that the condition for becoming a target AP for changing the connection destination is satisfied, despite the difference in type.

For example, in a case where the security method of the currently connected AP is "WPA1/2-PSK method" and the security method of the candidate AP is "WPA1/2-EAP method", the types of the authentication methods are determined to be different in S903. Further, in S904, in a case where it is determined that the setting values (user name, login name, and certificate necessary for authentication in the EAP method) for the EAP method are stored, the candidate AP is not excluded from the target for changing the connection destination. That is to say, the connection destination is not prevented from being changed to the candidate AP based on the change request.

The present embodiment describes an example in which, in a case where the determination result of S903 is NO, the processing proceeds to the process of S904. However, the present disclosure is not limited to this example. For example, a form may be employed in which, in a case where the determination result of S903 is NO, the process of S904 is skipped, and the processing proceeds to S905. That is to say, in a case where the type of the authentication method of the currently connected AP and the type of the authentication method of the candidate AP differ from each other, the CPU 212 may uniformly determine that the condition for becoming a target is not satisfied.

In S905, the CPU 212 determines that the AP is suitable as a target for changing the connection destination based on the change request. That is to say, it is determined that the candidate AP satisfies the condition for becoming a target AP after changing the connection destination. Further, the CPU 212 stores the determination result in the RAM 214 and/or the non-volatile memory 215.

In S906, the CPU 212 determines that the AP is unsuitable as a target for changing the connection destination based on the change request. That is to say, it is determined that the candidate AP does not satisfy the condition for becoming a target AP after changing the connection destination. The CPU 212 stores the determination result in the RAM 214 and/or the non-volatile memory 215.

### Setting Screen for Restricting Security Method Used When Connecting to AP

Fig. 10 illustrates an example of a setting screen for restricting the security method used by the MFP 100 when connecting to the AP in the wireless infrastructure mode. For example, the CPU 212 displays the setting screen in Fig. 10 on the operation display unit 220 upon receiving the selection of "wireless LAN advanced settings" on the screen in Fig. 3D. Further, while an example of displaying the setting screen on the operation display unit 220 of the MFP 100 is described herein, the present disclosure is not limited to this example. The setting screen in Fig. 10 may be displayed, for example, on an external device such as the mobile terminal device 104 by an application or a web browser capable of configuring the settings for the MFP 100.

The setting screen displays setting items (options) 1001 to 1004 of security methods for use when connecting to the AP in the wireless infrastructure mode. The setting items 1001 to 1004 may be displayed as, for example, interfaces capable of receiving instructions to set a lower limit for the security method. In other words, the setting screen is a screen for setting the lower limit for the security method used by the MFP 100 when connecting to the AP. Further, the setting screen can also be described as a screen for setting a security method available for use by the MFP 100 in connecting to the AP. That is to say, the setting screen is, in other words, a security setting screen. Further, the lower limit for the security method is, in other words, a standard for the security method used when the MFP 100 connects to the AP. As described above, the standard for the security method is set on the setting screen to prevent the connection destination of the MFP 100 from being changed to the AP using the security method that does not meet the standard.

The setting item 1001 displays security methods that are relatively secure. Examples of relatively secure methods include the WPA3-SAE (AES) and WPA1/2/3-EAP (AES) methods.

The setting item 1002 displays security methods that are moderately secure. Examples of moderately secure methods include the WPA1/2-PSK (AES) method.

The setting item 1003 displays security methods that are relatively insecure. Examples of relatively insecure methods include the WPA-PSK (TKIP) method.

The setting item 1004 displays security methods that are insecure. Examples of insecure methods include methods that do not require authentication when connecting to the AP. Examples of methods that do not require authentication include the OPEN method.

In a case where one of the setting items 1001 to 1004 of security methods is selected by a user operation on the setting screen, the CPU 212 stores the security methods of the selected setting item in the RAM 214 and/or the non-volatile memory 215. That is to say, the security methods of the setting item selected by the user are set as the lower limit for the security method used by the MFP 100 when connecting to the AP. This restricts connections to APs with a method that is less secure than the security method selected by the user, when the MFP 100 connects to an AP in the wireless infrastructure mode. Therefore, the MFP 100 is prevented from connecting to an AP with a security method that is not intended by the user.

Specifically, for example, in a case where the setting item 1001 is selected, the security methods of the setting item 1001 are available for use when the MFP 100 connects to an AP in the wireless infrastructure mode. On the other hand, the security methods of the setting items 1002 to 1004 are restricted in use.

Further, for example, in a case where the setting item 1002 is selected, the security methods of the setting items 1001 to 1002 are available for use when the MFP 100 connects to an AP in the wireless infrastructure mode. On the other hand, the security methods of the setting items 1003 and 1004 are restricted in use.

Further, the setting item 1001, 1002, 1003, or 1004 of security methods that is selected by the user on the setting screen may be used in the determination (S902 in Fig. 9) of whether to change the connection destination AP based on the change request in S708 and S714 to restrict the security method used to connect to an AP.

Further, in a case where all security methods used by APs acquired through the AP search in S702 and S706 in Fig. 7 are methods that are restricted on the setting screen, the APs are excluded from the AP search results to restrict the security method used to connect to an AP.

Further, for example, the setting items 1001 to 1004 with high security strength may be displayed preferentially on the setting screen. For example, items with high security strength may be displayed at a higher position or highlighted on the setting screen.

The present embodiment describes an example in which the security methods of the setting item 1001, 1002, 1003, or 1004 selected by the user on the operation display unit 220 of the MFP 100 are stored. However, the present disclosure is not limited to this example. For example, in a case where the setting screen in Fig. 10 is displayed on an external device such as the mobile terminal device 104 as described above, the security method settings may be stored based on specific signals transmitted from the external device.

As described above, in the process of S902 in Fig. 9 executed in S708 according to the present embodiment, the MFP 100 executes an AP search upon receiving the measurement request from the currently connected AP. The MFP 100 performs control so that a false response regarding information about APs that are discovered through the AP search and with lower security strength than the security strength of the currently connected AP is included in a beacon report (response to the measurement request) according to the second suppressive process described above. This prevents the currently connected AP from transmitting a change request to change the connection destination to an AP with a lower security method.

Further, in the process of S902 in Fig. 9 executed in S714 according to the present embodiment, the MFP 100 performs control based on the strength of the security method of the recommended AP upon receiving the connection destination AP change request from the currently connected AP. In a case where the recommended AP uses a security method with lower security strength than the security strength of the currently connected AP, the MFP 100 performs control so that the connection destination AP is not changed to the recommended AP according to the above-described first suppressive process. That is to say, the MFP 100 does not change the connection destination to the recommended AP and returns no response to the change request or returns a response indicating that the connection destination AP will not be changed. This prevents a decrease in security strength of the AP as a result of changing the connection destination based on the connection destination change request. Connections to APs with better communication environments are facilitated while the secure connection with the AP is maintained.

In the process of S901 in Fig. 9 executed in S708 according to the present embodiment, in a case where the APs discovered through the AP search include an AP that is unsupported by the MFP 100 or is restricted in use, the MFP 100 performs the following control. A false response regarding information about the AP unsupported by the MFP 100 or restricted in use is controlled to be included in the beacon report (response to the measurement request) according to the second suppressive process described above. This prevents transmission of change requests to change the connection destination to an AP that uses a security method unsupported by the MFP 100 or restricted in the MFP 100.

Further, in the process of S901 in Fig. 9 executed in S714 according to the present embodiment, the MFP 100 performs the following control upon receiving the connection destination AP change request. In a case where the security method of the recommended AP is unsupported by the MFP 100 or restricted in use, the connection destination is prevented from being changed to the recommended AP according to the first suppressive process. That is to say, the MFP 100 returns no response to the change request or returns a response indicating that the connection destination AP will not be changed. This prevents occurrences of situations where the MFP 100 disconnects the connection to the currently connected AP in an attempt to change the connection destination based on the connection destination change request but cannot connect to the recommended AP (fails to connect to the recommended AP).

In a case where, for example, the MFP 100 does not perform the process of S901 according to the present embodiment and instead disconnects the connection to the currently connected AP based on the connection destination change request and attempts to connect to the recommended AP using a security method unsupported by the MFP 100 or restricted in use, if the MFP 100 fails to connect to the recommended AP, the following issues occur.

The first issue is that since the connection to the current AP is temporarily disconnected before the switching, a period during which the MFP 100 cannot communicate with the AP arises. Furthermore, the processing time for connecting to the recommended AP and the processing time from the failed attempt to connect to the recommended AP to the successful connection to another AP are required. This increases the period during which communication cannot be performed. As a result, stable communication is disrupted. The second issue is that if the information necessary for connecting to the AP before the switching is not stored after the connection thereto is disconnected by the MFP 100 based on the connection destination AP change request, it becomes impossible to re-connect to the AP before the switching. The information necessary for connecting refers to connection information about at least one of the SSID and the password and other setting information. In order to prevent situations where the foregoing issues may occur, the present embodiment reduces unnecessary disconnections from the AP while performing control to connect to APs with better communication environments based on change requests, which makes it possible to perform more stable communication.

In the process of S903 in Fig. 9 executed in S708 according to the present embodiment, the MFP 100 performs an AP search upon receiving the measurement request from the currently connected AP. The MFP 100 includes a false response regarding information about APs that are discovered through the AP search and with a security method different in type from the security method of the currently connected AP in the beacon report (response to the measurement request) according to the above-described second suppressive process. This prevents transmission of change requests to change the connection destination to an AP with a security method that is different in type.

Further, in the process of S903 in Fig. 9 executed in S714 according to the present embodiment, the MFP 100 performs control based on the type of the authentication method of the recommended AP upon receiving the connection destination AP change request from the currently connected AP. In a case where the type of the authentication method of the recommended AP differs from the type of the authentication method of the currently connected AP, the MFP 100 performs control so that the connection destination is not changed to the recommended AP as in the first suppressive process. That is to say, the MFP 100 returns no response to the change request to the currently connected AP or returns a response indicating that the connection destination AP will not be changed. This makes it possible to facilitate connections to APs with better communication environments while maintaining the same type of the authentication method of the connection to the AP as the type at the time of configuring the wireless infrastructure mode. In other words, it becomes possible to facilitate connections to APs with better communication environments based on change requests while preventing issues caused by a decrease in security or overly strong security as a result of unintentionally changing the type of the authentication method with the AP.

Further, the process of S904 according to the present embodiment is performed so that even in a case where the authentication method types are different, if the setting values corresponding to the type of the authentication method of the recommended AP are stored, the connection destination AP is changed based on the change request. This makes it possible to facilitate connections to APs with better communication environments while maintaining the connection to the currently connected AP for the maximum possible duration.

An example of a method in which the security method of the candidate AP and the security method (S703 in Fig. 7) of the AP stored at the time of starting configuring the wireless infrastructure mode are compared in the determination of S902 is described above. However, the present disclosure is not limited to this form. For example, a comparison with a predetermined security method may be performed. Specifically, a comparison with a security method stored by a user operation on the operation display unit 220 of the MFP 100 as described above with reference to Fig. 10 may be performed. Further, a comparison with a security method stored by receiving specific signals from an external device such as the mobile terminal device 104 may be performed. Further, in the case of comparing with the predetermined security method in the process of S902, specifically, a comparison with a security method that is available for use and stored in one or more of the ROM 213, the RAM 214, and the non-volatile memory 215 of the MFP 100 may be performed.

Further, an example of a method in which whether the security method of the candidate AP is supported by the MFP 100 or restricted is determined in the determination of S901 has been described above. However, the present disclosure is not limited to this form. In the determination of S901, the CPU 212 may determine whether the MFP 100 and the candidate AP can be connected based on information acquired from the candidate AP and capability information of the MFP 100. For example, the determination may be performed based on one or more of the security method (authentication method and/or encryption method), frequency band, channel, and communication standards.

The present embodiment described above makes it possible to perform more suitable control on connection destination change requests from APs. That is to say, it becomes possible to switch the MFP 100 serving as a STA to a suitable AP.

The various controls described as performed by the CPU 212 may be performed by a single piece of hardware, or the processes may be allocated to a plurality of pieces of hardware (e.g., a plurality of processors and circuits) to control the entire apparatus.

Further, while the present invention has been described in detail based on preferred embodiments of the present invention, it is to be understood that the present invention is not limited to the specific embodiments, and various forms that do not depart from the essence of the invention are also encompassed within the present invention. Furthermore, the disclosed embodiments merely illustrate an embodiment of the present invention, and the disclosed embodiments can be combined as necessary.

Further, while the disclosed embodiment describes an example of a case where the present invention is applied to the MFP, the present disclosure is not limited to this example, and the present invention is applicable to any wireless device configured to function as a STA capable of performing processes based on connection destination change requests from APs. That is to say, the present invention is applicable to personal computers, personal digital assistants (PDAs), tablet terminals, mobile phone terminals such as smartphones, music players, game machines, electronic book readers, smartwatches, and various measurement apparatuses (sensor apparatuses) such as thermometers and hygrometers. Further, the present invention is also applicable to digital cameras (including still cameras, video cameras, network cameras, and surveillance cameras), printers, scanners, and drones. Further, the present invention is also applicable to video output apparatuses, audio output apparatuses (such as smart speakers), media streaming players, and wireless LAN clients (adapters) capable of connecting to universal serial bus (USB) terminals or LAN cable terminals. A video output apparatus includes a device such as a set-top box, and acquires (downloads) moving or still images on the Internet identified by uniform resource locators (URLs) specified by the electronic apparatus and outputs the acquired images to a display device connected via a video output terminal such as a High-Definition Multimedia Interface (HDMI) (registered trademark), thereby enabling streaming reproduction on a display device or screen mirroring (content displayed on the electronic apparatus is also displayed on the display device). Further, the video output apparatuses include media players such as televisions, hard disk recorders, Blu-ray recorders, and digital versatile disk (DVD) recorders, head mounted displays, projectors, televisions, display apparatuses (monitors), and signage apparatuses. Further, the present invention is also applicable to Wi-Fi-enabled devices referred to as smart home appliances, such as air conditioners, refrigerators, washing machines, vacuum cleaners, ovens, microwaves, lighting fixtures, heating appliances, and cooling appliances.

### Other Embodiments

The present invention can also be realized by a process in which a program for implementing one or more functions of the disclosed embodiment is supplied to a system or an apparatus via a network or a storage medium and one or more processors of a computer of the system or the apparatus read the program and execute the read program. Further, the present invention can also be realized by a circuit (e.g., application-specific integrated circuit (ASIC)) that implements one or more functions of the disclosed embodiment.

The present invention makes it possible to perform more suitable control on connection destination change requests from APs.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. An electronic apparatus (100) comprising:
changing means (212) for changing an access point (101, 102) serving as a connection destination based on a change request of an access point (101, 102) serving as a connection destination received from a connected access point (101, 102); and
control means (212) for performing control so that the changing means is prevented from changing the access point (101, 102) serving as the connection destination to a second access point (101, 102) as a connection destination after the change, the second access point (101, 102) being a candidate for a change destination based on the change request and configured to be connected using a second authentication method different in type from a first authentication method used to connect to a first access point (101, 102) connected before the change of the connection destination.

2. The electronic apparatus (100) according to claim 1, wherein the control means (212) performs control so that the second access point (101, 102) is prevented from becoming the connection destination after the change and the connection to the first access point is prevented from being disconnected.

3. The electronic apparatus (100) according to claim 1 or 2,
wherein, in a case where a recommended access point (101, 102) that is the candidate access point and recommended as a change destination in the change request includes a third access point (101, 102) configured to be connected using an authentication method identical in type to the first authentication method, the control means (212) performs control so that the changing means changes the access point serving as the connection destination to the third access point as the connection destination after the change, and
wherein in a case where the recommended access point (101, 102) includes the second access point, the control means (212) performs control so that the changing means does not change the access point serving as the connection destination to the second access point as the connection destination after the change.

4. The electronic apparatus (100) according to any one of claims 1 to 3, further comprising:
receiving means (212) for receiving a measurement request transmitted from the first access point (101, 102) and requesting a measurement result of signal quality of a nearby access point (101, 102) near the electronic apparatus;
measuring means (212) for measuring signal quality of the nearby access point (101, 102) in a case where the measurement request is received; and
transmitting means (212) for transmitting a response based on the measurement result by the measuring means to the first access point(101, 102),
wherein, in a case where the measurement result by the measuring means includes signal quality of the second access point, the control means causes the transmitting means to transmit the response with content indicating lower signal quality than the signal quality of the second access point measured by the measuring means or the response with content without including the signal quality of the second access point.

5. The electronic apparatus (100) according to any one of claims 1 to 3, wherein, in a case where a recommended access point (101, 102) that is the candidate access point (101, 102) and recommended as a change destination in the change request is an access point (101, 102) configured to be connected using the second authentication method, the control means (212) performs control so that the changing means does not change the access point (101, 102) serving as the connection destination based on the change request and a response indicating rejection of the changing of the connection destination based on the change request is transmitted to the first access point (101, 102) or no response to the change request is transmitted.

6. The electronic apparatus (100) according to any one of claims 1 to 5, further comprising recording control means (212) for performing control so that connection information to the first access point (101, 102) and an authentication method used to connect to the first access point (101, 102) are recorded,
wherein the control means (212) controls the change of the connection destination based on the change request, based on the authentication method used to connect to the first access point (101, 102) and recorded by the recording control means.

7. The electronic apparatus (100) according to any one of claims 1 to 6, further comprising setting means (212) for setting a security method available for use in connecting to an access point (101, 102) based on an operation from a user,
wherein an authentication method used to connect to the first access point (101, 102) is an authentication method based on the security method set by the setting means.

8. The electronic apparatus (100) according to any one of claims 1 to 7, wherein, in a case where an access point (101, 102) that is the candidate access point (101, 102) is configured to be connected using a third authentication method different in type from the first authentication method and a setting value used for connection using the third authentication method is stored, the control means (212) performs control so that the changing means is not prevented from changing the access point serving as the connection destination to the access point configured to be connected using the third authentication method.

9. The electronic apparatus (100) according to any one of claims 1 to 8, wherein the type of the first authentication method is one of a Simultaneous Authentication of Equals (SAE) method, a Pre Shared Key (PSK) method, an Extensible Authentication Protocol (EAP) method, and an OPEN method, and the type of the second authentication method is another one of the SAE method, the PSK method, the EAP method, and the OPEN method different from the type of the first authentication method.

10. The electronic apparatus (100) according to any one of claims 1 to 9, wherein the type of the first authentication method is one of personal and enterprise, and the type of the second authentication method is another one of personal and enterprise.

11. The electronic apparatus (100) according to any one of claims 1 to 10, wherein the control means (212) further performs at least one of:
a first control for controlling the changing means so that the changing means (212) is prevented from changing the access point serving as the connection destination to an access point as the connection destination after the change that is configured to be communicated using a security method lower in security strength than a security method used to communicate with the first access point; and
a second control for controlling the changing means (212) so that the changing means is prevented from changing the access point serving as the connection destination to an access point as the connection destination after the change that is configured to be communicated using a security method that is unsupported by the electronic apparatus or a security method that is restricted in use in the electronic apparatus.

12. The electronic apparatus (100) according to any one of claims 1 to 11, wherein the electronic apparatus performs at least one of:
connection to an access point and a process compliant with an IEEE 802.11ax standard;
a process compliant with Orthogonal Frequency-Division Multiple Access (OFDMA); and
a process compliant with Target Wake Time (TWT).

13. The electronic apparatus (100) according to any one of claims 1 to 12, wherein the electronic apparatus changes the connection destination to an access point using a 6 GHz frequency band by changing the connection destination based on the change request.

14. The electronic apparatus (100) according to any one of claims 1 to 13, further comprising printing means for executing a printing process based on print data received via an access point.

15. The electronic apparatus (100) according to any one of claims 1 to 14, wherein the control means performs control based on an authentication method of the candidate access point.

16. A program for causing at least one computer to function as each means of the electronic apparatus according to any one of Claims 1 to 15.

17. A computer-readable storage medium storing a program for causing at least one computer to function as each means of the electronic apparatus according to any one of Claims 1 to 15.

18. A method for controlling an electronic apparatus (100), the method comprising:
changing an access point (101, 102) serving as a connection destination based on a change request of an access point (101, 102) serving as a connection destination received from a connected access point (101, 102); and
performing control so that changing the access point (101, 102) serving as the connection destination to a second access point (101, 102) as a connection destination after the change is prevented, the second access point (101, 102) being a candidate for a change destination based on the change request and configured to be connected using a second authentication method different in type from a first authentication method used to connect to a first access point connected before the change of the connection destination.
